(19) Europäisches Patentamt
European Patent Office
Office européen des brevets

(11) EP 2 892 727 B1

(12) **EUROPEAN PATENT SPECIFICATION**

(45) Date of publication and mention of the grant of the patent:
**22.08.2018 Bulletin 2018/34**

(21) Application number: **13756980.2**

(22) Date of filing: **26.08.2013**

(51) Int Cl.:
***B41M 5/52*** *(2006.01)* ***C08G 18/48*** *(2006.01)*
***C08G 18/66*** *(2006.01)* ***C08G 18/72*** *(2006.01)*
***C08G 18/80*** *(2006.01)* ***C08G 18/08*** *(2006.01)*
***C08G 18/12*** *(2006.01)* ***C09D 175/04*** *(2006.01)*
***C08G 18/32*** *(2006.01)*

(86) International application number:
**PCT/US2013/056605**

(87) International publication number:
**WO 2014/039306 (13.03.2014 Gazette 2014/11)**

(54) **FABRIC PRETREATMENT FOR DIGITAL PRINTING**

STOFFVORBEHANDLUNG FÜR DIGITALDRUCK

PRÉTRAITEMENT DE TISSU POUR IMPRESSION NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2012 US 201261697834 P**

(43) Date of publication of application:
**15.07.2015 Bulletin 2015/29**

(73) Proprietor: **Lubrizol Advanced Materials, Inc.**
**Cleveland, OH 44141-3247 (US)**

(72) Inventors:
- **PAN, Yun-Long**
  **Cleveland, Ohio 44141-3247 (US)**
- **ANDERLE, Gary A.**
  **Cleveland, Ohio 44141-3247 (US)**
- **LUBNIN, Alexander V.**
  **Ohio 44141-3247 (US)**
- **ROHDE, Stacy L.**
  **Cleveland, Ohio 44141-3247 (US)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A1- 1 777 243** **WO-A1-2012/058534**
**US-A- 6 140 412**

EP 2 892 727 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF INVENTION

The invention relates to a substrate pretreatment for digital printing derived from aqueous cationic polyurethane dispersions (PUDs), coagulating acidic additives, and a reactive crosslinking agent. The performance of the polyurethanes is enhanced by particular tertiary amino groups, *i.e.,* tethered tertiary amine groups (amine groups in the side chain) generally neutralized with an acid; the ink receptivity of the substrate pretreatment is improved by a coagulating acidic additive and polyvalent metal cations; and the adhesion to substrate and image wash resistance are improved by a reactive crosslinking moiety. Such pretreatments are useful in various ink receptive applications, including digital and/or textile printing.

### BACKGROUND OF THE INVENTION

Digital printing, including inkjet, is a method of reproducing an image or data onto a medium directly from a computer, typically on conventional substrates. When the ink is applied onto the media, it should stay in a tight, symmetrical dot; otherwise the dots of the ink will begin to penetrate into the receiving media, feather, or spread out in an irregular fashion to cover a slightly larger area than the digital printer designer intended. The result is an image or data that appears to have low color intensity, fuzziness, especially at the edges of objects and text, etc.

EP 1 924 658 to E.I. Du Pont de Nemours describes an aqueous vehicle (ink) having dispersed therein titanium dioxide pigment dispersed with a polymeric dispersant and a crosslinked polyurethane binder additive (different from the polymeric dispersant). The white ink was deemed especially useful for printing images on non-white textiles.

US 2008/0092309 A1 to E.I. Du Pont de Nemours describe an aqueous inkjet printing pretreatment comprising a nonionic latex polymer and a multivalent cationic salt.

US 2007/0103528 to Kornit relates to an ink for digitally printing to produce high-quality and durable abrasion-fast image which will not deteriorate in washes or be harsh to the touch and brittle.

EP 1 356 155 to Kimberly-Clark Worldwide, Inc. relates to a cationic polymer coating formulation for ink jet printing used in conjunction with imbibing solutions. The imbibing solutions can be urea (for acid dye-based ink) or ammonium salts such as ammonium oxalate and ammonium tartrate. In one embodiment, the formulation includes 5-95% cationic polymers or copolymers and from about 5-20% fabric softeners. The cationic polymers are shown in Figs. 1A-1C of the reference and appear to be free radically polymerized polymers such as from diallyl ammonium monomers.

EP 1 240 383 to Kimberly Clark Worldwide, Inc. relates to coating formulation improvements including imbibing solutions for treating substrates such as cationic polymers or copolymers and fabric softeners. It also describes polymeric latex binders to increase washfastness.

WO 2012/058534 discloses an aqueous cationic polyurethane dispersion used as coating on ink receptive substrates comprising a polyurethane backbone with tertiary amino groups laterally attached to said backbone segment, said tertiary amino group being separated from the polyurethane backbone by at least two intervening atoms.

EP 1777243 discloses a cationic polyurethane resin aqueous dispersion, wherein a cationic polyurethane is dispersed in an aqueous medium. The cationic polyurethane resin aqueous dispersion is excellent in waterproof characteristics, durability, adhesiveness and the like, which can be applied to various usages such as for heat-transfer media, heat-sensitive media, heat-sensitive stencil printing plate media, coatings, adhesives, cosmetics, plating, fibers, toiletries, medical articles, packing articles and the like, as well as for a glass sizing agent and a receiving agent for a recording material for ink-jet printing. The cationic polyurethane contains quaternized tertiary amino groups that are separated from the polyurethane backbone by one methylene group

The above references teach different ways to improve properties of images on various backgrounds. Some call for cationic polymers, some call for fabric softeners, some call for crosslinked particles, some recite titanium dioxide pigments while others use reactive dyes. They all seem to seek soft-feel images on textiles that have good color intensity, crisp well defined images, and good retention of color during mechanical washing of the textiles.

### SUMMARY OF THE INVENTION

The present invention relates to

1. a substrate pretreatment material comprising;

   a) an aqueous cationic polyurethane dispersion (PUD) comprising an aqueous dispersion of a polyurethane having a polyurethane backbone segment with one or more tethered tertiary amino groups laterally attached

to said backbone segment wherein said tertiary amino groups are optionally partially or fully neutralized with a neutralising acidic species or quaternized and wherein said tertiary amine groups are separated from said polyurethane backbone by at least one, more preferably at least two, intervening atoms in their tethering group,
b) a blocked isocyanate crosslinking moiety as part of the polyurethane and/or as a separate molecule from said polyurethane,
c) additional organic and/or inorganic coagulating acid in an amount of at least one equivalent per equivalent of tethered or backbone tertiary amine beyond the amount of acidic species that were required to fully neutralize said tertiary amine groups and up to 50 times said amount in equivalents to neutralize said tertiary amine groups, and
d) one or more water soluble di- and/or polyvalent metal salts selected from the group consisting of salts of $Ca^{2+}$, $Al^{3+}$, $Mg^{2+}$, $Zn^{2+}$ and $Zr^{4+}$, preferably wherein the counter ions are selected from $NO_3^-$ , $SO_4^{2-}$, acetate, or $Cl^-$.

2. The substrate pretreatment material of embodiment 1, wherein the organic or inorganic coagulating acid beyond that required to fully neutralize the tertiary amine comprises a water soluble organic carboxylic acid of 1 to 20 carbon atoms having 1 or more acid groups, a phosphorus containing acid, and/or an aluminum based acid.
3. The substrate pretreatment material of any of embodiment 1 or 2, wherein said neutralizing acid species of element a) comprises at least one acidic species selected from the group consisting of formic, acetic, oxalic, citric, tartaric, itaconic, stearic, and phosphorous containing acid and derivatives thereof.
4. The substrate pretreatment material of any of embodiments 1 to 3, further comprising a surface active agent and/or spreading agent selected from the group consisting of nonionic surfactants, cationic surfactants, mono or polyhydric alcohols having molecular weights from 32 to 100 or 200 g/mole to facilitate bonding to the substrate, preferably wherein said mono alcohol is ethanol or isopropanol.
5. The substrate pretreatment material of any of the preceding embodiments, wherein the coagulating organic or inorganic acid comprises acetic, citric, oxalic, formic, itaconic, tartaric, $AlCl_3$, and/or phosphoric acid or derivatives of said acids.
6. The substrate pretreatment material of any of the preceding embodiments, wherein the blocked isocyanate crosslinking moiety comprises a molecule containing 1,3-diketone functionality, desirably esters of malonic acid, preferably a dialkyl malonate molecule where each independent alkyl group has 1 to 12 carbon atoms, more preferably said crosslinking moiety attached to the polyurethane as opposed to being part of a separate molecule from the polyurethane, most preferably wherein the molecule containing 1,3-diketone functionality comprises diethyl malonate.
7. The substrate pretreatment material of any of embodiments 1 to 5, wherein the reactive crosslinking moiety is a self-crosslinking moiety attached to the polyurethane and comprises dialkyl ketoxime wherein each independent alkyl group has 1 to 12 carbon atoms, preferably wherein the dialkyl ketoxime comprises methyl ethyl ketoxime.
8. The substrate pretreatment material of any of embodiments 1 to 7, wherein said polyurethane further comprises from 0.1 to 15 weight percent of side-chain hydrophilic oligomers of $C_2$-$C_4$ alkylene-oxides based on the polyurethane binder weight, preferably having a lower limit of 0.5 or 1 and an upper limit of 6 or 10 weight percent.
9. The substrate pretreatment coating material of any of the preceding embodiments, wherein the tethered tertiary amino groups are incorporated into the polyurethane by reacting at least one tertiary amino group compound having about two isocyanate-reactive hydrogens during the synthesis of said polyurethane and wherein at least a portion of said tethered tertiary amino groups form cationic groups.
10. The substrate pretreatment material of any of the preceding embodiments, wherein the polyurethane of said aqueous cationic polyurethane dispersion is present from 2 to 15 % by weight, or 2 to 10 % by weight, based upon the weight of said substrate pretreatment as applied.
11. The substrate pretreatment material of any of the preceding embodiments, wherein at least 50 mole % of said tethered tertiary amino groups are neutralized or quaternized versions thereof and wherein said tethered tertiary amino groups are derived from 3-dimethylaminopropylamino-1,1'-bis-(propan-2-ol); 3-dimethylamino-1,2-propanediol; or N,N,N'-trimethyl-N'-hydroxyethylbisaminoethylether.
12. A substrate pretreatment material, according to any of the preceding embodiments, as a dried film or coating on a substrate, said substrate comprising a polymer film or a woven or nonwoven substrate.
13. A substrate pretreatment material, as a dried film or coating, on a substrate according to embodiment 12 in the form of a textile cloth or garment.
14. A substrate pretreatment on a substrate according to embodiment 12, wherein said woven or nonwoven substrate is at least 25 wt.% cotton, more desirable at least 50 wt.% cotton and preferably at least 80 wt.% cotton, or wherein said woven or nonwoven substrate is at least 25 wt.% polyester, more desirable at least 50 wt.% polyester and in one embodiment preferably at least 80 wt.% polyester, or wherein the substrate is paper, desirably in the form of a textile or garment, optionally dyed or pigmented, or wherein the substrate is a polymeric film, in one embodiment

desirably a polyolefin or polyester based substrate and preferably a polypropylene based substrate.

The present invention is directed towards substrate pretreatment composition comprising an aqueous cationic polyurethane dispersion, comprising an aqueous dispersion of polyurethane, having tertiary amino groups attached to urethane in locations to optimize interaction of the amino groups with an aqueous dispersion media and subsequently applied pigmented inks. The position for the tertiary amino groups is tethered tertiary amino group(s) laterally attached to the urethane backbone and said amino groups are optionally neutralized with an acid and/or quaternized. Tethered is interpreted to indicate that the group containing the tertiary amine is laterally pendant from the urethane backbone and said tertiary amine group is separated from said urethane backbone by at least one and in preferred embodiments, at least two intervening atoms, such as selected from the group consisting of carbon, nitrogen, oxygen and preferably carbon. To distinguish tethered groups from branches, in some preferred embodiments, the structure extending laterally from the urethane backbone will contain one or less groups derived from di- or polyisocyanate molecules (noting that a branch group of a urethane polymer typically contains many groups derived from di- or polyisocyanates) per lateral pendant group with a tertiary amine. In a preferred embodiment, the structure extending laterally from the urethane backbone will contain no groups derived from di- or polyisocyanates. In one embodiment, the structure laterally extending from the urethane backbone will have a molecular weight of less than 400 Dalton, and in a more preferred embodiment less than 200 Dalton.

**Coagulating Acids**

The coating composition also includes a water soluble (desirably water soluble at concentrations of 10g/l or more, more desirably 25 g/l or more, and preferably 50 g/l or more at 25°C) acid component selected from inorganic and organic acids such as phosphoric acid, $AlCl_3$ or their derivatives or a carboxylic acid or combinations thereof. These water soluble acids will be called coagulation acids as their function is to help coagulate anionic colloidally stabilized inks applied over the pretreatment. They may include Brönsted and/or Lewis acids. The coagulating acid, if organic, can have one or more carboxylic acid groups. It generally has from 1 to 20 carbon atoms, and more preferably from 1 to 10 carbon atoms. Preferred organic coagulating acids include formic, acetic, citric, tartaric, itaconic, and oxalic acids. Preferred inorganic acids include aluminum based acids, $AlCl_3$, $AlCl_3$ derivatives, phosphoric acids, and phosphoric acid derivatives. Without being bound by theory, $AlCl_3$ generates HCl when added to water and thus, one can say, the HCl protonates the tertiary amine (the amount of HCl will depend on the degree of hydrolysis of the $AlCl_3$). $AlCl_3$ also supplies a polyvalent metal ion to the pretreatment so the $AlCl_3$ can function as both the coagulating acid and a source (partial or complete source) of a divalent metal (that also promotes coagulation of anionically stabilized inks). The coagulating acid can be present in amounts significantly higher than the protonating acid (described below). The coagulating acid is typically present in amounts from 1 to 50 equivalents per equivalent of tertiary amine groups, more desirably from 1.5 to 40, and preferably from 1.5 to 30 equivalents per tertiary amine group (both backbone and laterally attached tertiary amine atoms) in the urethane polymer of the pretreatment. In determining the equivalents of coagulating acids, one would pre-subtract sufficient equivalents of acid such that every tertiary amine in the polyurethane has 1 acid group to protonate it (thus, if sufficient acid was introduced during urethane dispersion formation, the first molecule of coagulating acid would count towards the amount of coagulating acid; but if only 50% of the tertiary amine groups were provided with the acid molecules during dispersion formation, then sufficient coagulating acids would be added to provide 1 acid equivalent for the 50% of tertiary amines that lacked an acid, before starting to count the coagulating acid added towards the specified amount of coagulating acid).

**Neutralizing Acids**

A separate/different acid component may also function to convert the tertiary amine group of the cationic polyurethane to cations (aiding colloidal stability of the polyurethane dispersion). The acid used to protonate the tertiary amines will be known as the protonation or neutralization acid. If the acid used to protonate or neutralize the tertiary amine remains as a volatile acid it might volatilize after film formation (allowing the polar cationic amines to revert back to less polar (more hydrophobic) tertiary amines. If the tertiary amine groups are permanently protonated with non-volatile acid or quaternized with a quaternization agent, the opportunity of forming reversible cations with the acid component is diminished. Acids retained in the coating will help to colloidally destabilize any anionic dispersed pigment or binder in an aqueous ink applied to the coating.

**Reactive Crosslinking Moiety**

The coating composition also includes a latent reactive crosslinking component such as blocked isocyanates and/or 1,3-diketone functionality. The reactive crosslinking moiety includes 1,3-dicarbonyl compounds (also referred to

as molecules containing 1,3-diketone functionality) such as esters of malonic acid and ketoximes such as butanone oxime. Polyurethane films are normally applied as a dispersion that easily forms a film at the temperature at which polyurethane is applied to a substrate and processed. After film formation it is sometimes desirable to crosslink or build the molecular weight of the polyurethane to provide barrier properties, enhanced tensile strength, or durability to the film. The reactive crosslinking moiety promotes or facilitates bonding of the urethane prepolymer to the various substrate(s). In the current disclosure it is desirable to provide enhanced wear resistance and wash-fastness in not only the pretreatment film but also any ink-jet ink or films applied to the pretreatment. While we use the term reactive crosslinking component we understand that the reactive crosslinking component can react with the surface of the substrate (providing bond strength to the substrate), and within the polyurethane of the pretreatment. Crosslinking within the pretreatment film provides a more durable pretreatment film. Bonding to a substrate provides a more durable composite image structure.

Cationic polyurethane dispersions, according to this disclosure, generally provide properties superior to anionic or nonionic binders. These properties include colloidal stability at low pH and in the presence of cationic additives, acids, and salts, enhanced color intensity (in subsequently applied coatings/images), good adhesion of the coating to a textile substrate, good color retention after washing (good wash resistance), reduced wicking, enhanced abrasion resistance, undistorted colors, and fast drying rate. Some of the additives, such as excess acids, salts or cations, aid in coagulation of subsequently applied inks to maximize color intensity and the sharpness of the image. Reactive crosslinking moieties anchor the binder and pigments to the substrate and hold the images in place during washing. All of the elements of the pretreatment have to be carefully balanced to produce a soft pliable high definition image with good durability. Generally, the pretreatment is thermally cured before digital ink is applied, and the ink is thermally cured after application on the pretreatment. Optionally, a clear coating can be applied over any colored image. It is anticipated that a cationic film from the cationic pretreatment polyurethane dispersion and its additives form an intermediate layer between a substrate and a colored image. Subsequently, applied films or inks may penetrate slightly into the pretreatment or may just adhere or bond to the pretreatment.

Fabric and garment pretreatments generally need to be clear coatings so they can be applied over a wide variety of different colored substrates. If the substrate is a dark color the pretreatment desirably helps the later applied digital ink (especially white ink) become an opaque layer (optimizing color intensity and minimizing substrate contribution to colors) with minimal ink thickness. The pretreatment and digitally applied ink need to provide wear resistance to a final digital image while the garment is worn, subjected to abrasive contact with other fabrics (such as while cleaned in a washing machine), or comes in frictional or abrasive contact with floors, walls, carpet, etc. The pretreatment and digital ink image desirably neither change the softness, flexibility, feel, etc., of the image area of the fabric or garment nor cause puckering of the fabric or garment due to different shrinkage rates in the image and non-image portion of the substrate. Most coatings (especially crosslinked coatings, which tend to be more durable) on textiles make the textile stiffer (less soft). Achieving similar softness to the uncoated textile on a coated textile while enhancing durability of an image on the coated textile is a difficult task.

## BRIEF DESCRIPTION OF THE DRAWING

The attached drawing illustrates the Chromaticity Diagram from ASTM E308-85 color results on a digitally printed image on top of either a commercial direct to garment pretreatment or the P-18 pretreatment of this disclosure.

## DETAILED DESCRIPTION OF THE INVENTION

### Definitions

The following terms have definitions as stated below:

Tethered amine group refers to a location of the amine group away from the main polymer backbone. In such an arrangement, multiple amine groups are connected with the said backbone via a spacer. This topology can be represented by the following diagram:

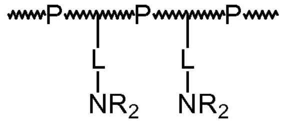

where P designates a urethane polymer backbone, L is a link or spacer, and $NR_2$ is tethered tertiary amine which can be either neutralized with an acid or quaternized. In some embodiments, the tertiary amine group can be part of a cyclic alkyl or aromatic structure instead of $NR_2$. In one embodiment, the tethered tertiary nitrogen will not be part of an aliphatic or aromatic ring. Each R is generally independent of the other and can be a lower alkyl group (e.g., 1 to 5 carbon atoms,

preferably 1 or 2 carbon atoms) or an alkyl amine which can include another tertiary amine group. Each L can be a linking group (substituted, linear, branched, cycloalkyl, aromatic, or combinations thereof which can include urethane linkages, ester linkages, and in addition to carbon can contain heteroatoms such as oxygen and nitrogen). In a preferred and simple embodiment, L is generally methylene, ethylene, propylene or other alkylene groups of 1 or 2 to 6, preferably 2 to 4, and most preferably 2 or 3 carbon atoms.

A subset to this topology, referred hereafter as terminal tertiary amino groups (being other than tethered tertiary amino groups), can be represented by the following diagram:

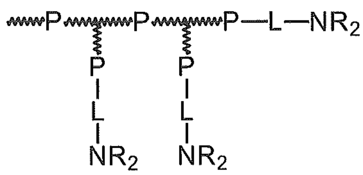

In this arrangement, amine groups are attached to the chain ends of the branched polymer. In this embodiment, L and R are as defined above for the tethered tertiary amino group. In one embodiment, the cationic centers (either in part or in total) are derived from terminal groups of the polyurethane having tertiary nitrogen groups (optionally quaternized or neutralized with an acid).

The term "tethered" herein is synonymous to terms "laterally attached", "pendant" and "side-chain groups" which are equally used in the technical literature. These laterally attached tertiary amine groups can be optionally neutralized and /or quaternized.

In a preferred embodiment at least 50 mole % of said tethered tertiary amino groups are neutralized or quaternized versions thereof and wherein said tethered tertiary amino groups are derived from 3-dimethylaminopropylamino-1,1'-bis-(propan-2-ol); 3-dimethylamino-1,2-propanediol; or N,N,N'-trimethyl-N'-hydroxyethylbisaminoethylether.

Polyurethane is a term used to describe polymers including oligomers (e.g., prepolymers) which contain the urethane group, i.e., -O-C(=O)-NH-, regardless of how they (urethane linkages) are made. As well known, these polyurethanes can contain additional groups such as urea, allophanate, biuret, carbodiimide, oxazolidinyl, isocyanurate, uretdione, ester, ether, carbonate, hydrocarbon, fluorocarbon, alcohol, mercaptan, amine, hydrazide, siloxane, silane, ketone, olefin, etc., in addition to urethane groups.

Final polyurethane product refers to the form of the polyurethane in the aqueous dispersion product of this invention. Where the polyurethane prepolymer is optionally chain extended, the final polyurethane product is this chain extended polymer. Where the polyurethane prepolymer is not chain extended, the final polyurethane product is the prepolymer itself.

Weight % means the number of parts by weight of ingredient per 100 parts by weight of composition or material (often per 100 parts by weight of urethane polymer or oligomer) of which the ingredient forms a part. All units will be in weight % unless otherwise stated.

Aqueous describes a composition containing a substantial amount of water. Preferably aqueous will mean at least 20 wt.% water and in a more preferred embodiment it will be at least 50 wt.% water based on water and other solvents. It may contain other ingredients such as organic solvents as well. Thus, if we say aqueous polyurethane dispersion, we will mean in a preferred embodiment that the polyurethane is dispersed in a liquid media that is at least 20 wt.% water and can contain compatible organic materials such as alcohol and other polar organic solvents.

Substantial absence of water refers to compositions formed without the intentional addition of any significant amount of water, e.g., about 2 wt.% or less or so based on the total weight of the composition. Typically, the reaction of isocyanates with polyols is conducted in the substantial absence of water as water can separately react with isocyanates to form less desirable and less controlled structures.

Polymer backbone is a continuous interconnected sequence of atoms between the first atom of the first repeating unit and the last atom of the last repeating unit. Atoms which are pendant from the backbone such as the methyl groups in toluene diisocyanate (TDI) derived units or poly-(1,2-propylene oxide) will be considered as pendant moieties and not backbone atoms.

The present invention is directed to a substrate pretreatment formulated from cationic polyurethane dispersions (i.e., pretreatment composition) for use in waterborne digital print applications wherein tethered amines have been incorporated into urethane and the coating has been formulated. Tethered amine groups with spacers, one atom or more, are particularly preferred. An important subclass of the tertiary and/or quaternized amines is the monomers with more than one tertiary amine groups in one molecule.

There are two ways to impart the cationic charge to the polyurethane: neutralization (protonation/salt formation) by acids and quaternization by reacting with species such as organic halides, sulfates and oxiranes (epoxides). Unlike neutralization, quaternization is permanent. Salt formation with acids is reversible especially if the acid is volatile (*e.g.*,

acetic or hydrochloric acid). The amine salts may revert back to non-neutralized (non-salt) form during drying, and if the salts revert back, the polymer becomes more water resistant which may provide superior performance in some instances.

**Polyurethanes**

Polyurethanes of this invention are formed from at least one polyisocyanate and at least one NCO-reactive compound.

Any compound that provides a source of active hydrogen for reacting with isocyanate groups via the following reaction: -NCO+H-X → -NH-C(=O)-X, can be used as the NCO-reactive compound in this invention. Examples include, but are not limited to, polyols, polythiols and polyamines.

**Isocyanates**

Suitable polyisocyanates have an average of about two or more isocyanate groups, preferably an average of about two to about four isocyanate groups per molecule and include aliphatic, cycloaliphatic, araliphatic, aromatic, and heterocyclic polyisocyanates, as well as products of their oligomerization, used alone or in mixtures of two or more. Diisocyanates are more preferred, but even monofunctional isocyanates can be used, for example, as molecular-weight controlling agents.

Specific examples of suitable aliphatic polyisocyanates include alpha, omega-alkylene diisocyanates having from 5 to 20 carbon atoms, such as hexamethylene-1,6-diisocyanate (HDI), 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, lysine diisocyanate and the like. Polyisocyanates having fewer than 5 carbon atoms can be used but are less preferred because of their high volatility and toxicity. Preferred aliphatic polyisocyanates include hexamethylene-1,6-diisocyanate, 2,2,4-trimethyl-hexamethylene-diisocyanate, and 2,4,4-trimethyl-hexamethylene diisocyanate.

Specific examples of suitable cycloaliphatic polyisocyanates include dicyclohexylmethane diisocyanate, isophorone diisocyanate (IPDI), cyclohexane diisocyanate, bis-(isocyanatomethyl) cyclohexane, methylcyclohexane diisocyanate, cyclohexane triisocyanate, their isomers and the like. Preferred cycloaliphatic polyisocyanates include dicyclohexylmethane diisocyanate and isophorone diisocyanate.

Specific examples of suitable araliphatic polyisocyanates include m-tetramethyl xylylene diisocyanate, p-tetramethyl xylylene diisocyanate, 1,4-xylylene diisocyanate, 1,3-xylylene diisocyanate, and the like. A preferred araliphatic polyisocyanate is tetramethyl xylylene diisocyanate.

Examples of suitable aromatic polyisocyanates include diphenylmethylene diisocyanate (MDI), toluene diisocyanate (TDI), phenylene diisocyanate, naphthalene diisocyanate, tetrahydronaphthalene diisocyanate, biphenylene diisocyanate, dimethyl biphenylene diisocyanate, dichloro biphenylene diisocyanate, triphenyl methane triisocyanate, their isomers, and the like. Preferred aromatic polyisocyanates include 4,4'-diphenylmethylene diisocyanate and toluene diisocyanate.

Examples of suitable heterocyclic isocyanates include 5,5'-methylenebisfurfuryl isocyanate and 5,5'-isopropylidenebisfurfuryl isocyanate.

Dimers, trimers, and oligomers of the above mentioned isocyanates may also be used. Examples include polymeric MDI.

Isocyanates can be used alone or in combination of two or more.

Normally, the prepolymer produced in the present invention will be isocyanate-terminated. For this purpose, the ratio of isocyanate equivalents to active hydrogen in the prepolymer typically ranges from 1.3/1 to 2.5/1, preferably from 1.5/1 to 2.1/1, and more preferably from 1.7/1 to 2/1.

An OH-terminated prepolymer can also be made if desired. In this case, an excess of OH equivalents over NCO is used.

**Tethered Tertiary or Quaternized Nitrogen Groups**

Cationic polyurethanes contain cationic centers built into and/or attached to the backbone. Such cationic centers may include ammonium, phosphonium and sulfonium groups. These groups can be incorporated into the polymer in the ionic form or, optionally, they can be generated by post-neutralization or post-quaternization of corresponding nitrogen, phosphorus, or sulfur moieties. The combination of all of the above groups can be used as well as their combination with nonionic stabilization. Anionic groups also can be incorporated into the polymer producing zwitterionic compositions.

In one embodiment, a cationic center is derived from reacting into the polyurethane (through conventional isocyanate reactions with isocyanate-reactive groups on a reactant carrying the tertiary amine group(s)). One or more compounds carrying tethered tertiary amino group(s) can be used such that, when said compound is incorporated into the polyurethane, the tethered tertiary nitrogen atom is separated by at least one or two atoms from the closest atom of

the polyurethane backbone. It is more preferred that the tertiary nitrogen atom is separated by at least two atoms (more preferably at least three atoms) from the closest atom of the polyurethane backbone.

In one embodiment, it is preferred that compounds having/carrying tethered tertiary amino group contain on average two reactive groups which can participate in building polyurethane of the present invention.

Examples of preferred tethered amine monomers include 1,1'-{[3-(dimethylamino)propyl]imino}-bis-2-ethanol (I); 1,1'-{[3-(dimethylamino)propyl]imino}-*bis*-2-propanol (II, Jeffcat® DPA from Huntsman); 3-dimethylamino-1,2-propanediol (III); and N,N-*bis*-(2-hydroxyethyl)-isonicotinamide (IV,BIN).

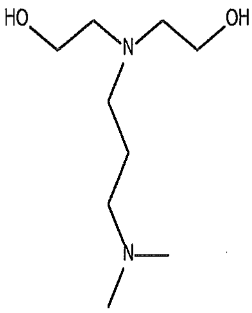
I

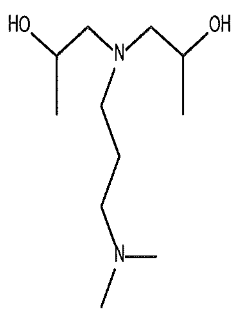
II

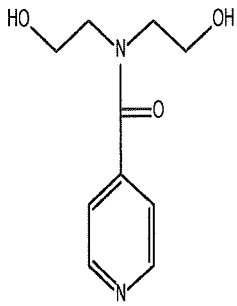
IV

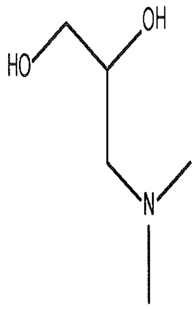
III

Monomers with tethered amines, later protonated or quaternized, can be sourced or made various ways such as disclosed in WO 2012/058534 in paragraphs 0035-0053. In place of dialkanolamines, asymmetric dialkyl diaminoalkylenes can be used producing tethered amine urethane-urea monomers. Examples include dimethylaminopropylamine, dimethylaminohexylamine, and aminopropylmorpholine.

The tethered monomers may be used in polyurethane synthesis as chain extenders or as components of polyester or polyether polyol similar to VORANOL™ and VORACTIV™ polyols from Dow. The latter can be used either in combination with tethered monomers or by themselves.

Tethered monomers described in this disclosure may also be used in combination with any other tertiary amino group (tethered or non-tethered) which can contain aliphatic, cycloaliphatic or aromatic substituents.

Cationic nature can also be imparted or improved by post-polymerization reactions such as, for example, reaction of epoxy quaternary ammonium compounds with carboxylic group of dimethylol propanoic acid monomeric unit.

The number of tethered tertiary amino groups may be from 0.1 to 15 or 20 milliequivalents per gram of urethane polymer. In one embodiment, the lower limit is 0.2, 0.3, 0.4, 0.5, or 0.6 milliequivalent/gram and the upper limit is 10, 8, 5, 4, 3, 2, 1 or less than 1 milliequivalent per gram of urethane polymer. The number of tethered tertiary amino groups goes down as the groups are quaternized or neutralized with an acid (which makes them more effective in colloidally stabilizing the urethane dispersion in water). The number of tethered tertiary amino groups also goes down as nonionic and/or zwitterionic groups are added to the urethane polymer to supplement the cationic stabilization effect for colloidal stabilization for the urethane dispersion in water. For the purpose of facilitating the calculation of the amount of tethered tertiary amino groups for the above ranges, if there are multiple tethered tertiary amino groups in one group tethered or terminal location from the urethane backbone, all of the tethered tertiary amino groups together will be counted as a single tethered tertiary amino group. Tethered tertiary amino groups will be counted the same irrespective of whether they are quaternized or neutralized with an acid component. In one example without any nonionic colloidal stabilization moieties, we found very effective colloidal stabilization using just 0.87 milliequivalents of tethered tertiary amino groups per gram of urethane polymer.

### Quaternary Salts

The tertiary amine may be quaternized with any known quaternizing agent. Preferred quaternizing agents are alkyl halides, aralkyl halides, dialkyl carbonates, dialkyl sulphates and epoxides (note when using epoxides, one typically needs an acid present). Particularly preferred quaternizing agents include methyl chloride, ethyl chloride, benzyl chloride, methyl bromide, ethyl bromide, benzyl bromide, dimethyl sulfate, diethyl sulfate, ethylene oxide, propylene oxide, butylene oxide, styrene oxide and epichlorohydrin. In one embodiment, it is preferred that the tertiary amine groups are quaternized to some extent.

### Salts Formed by Reaction of Tertiary Amine with Neutralizing Acids

In another embodiment, the tertiary amines can be neutralized to make cationic salts with virtually any acid.

Examples of acid include acetic acid, formic acid, hydrochloric acid, phosphorous containing acid such as phosphoric acid, sulfuric acid, nitric acid, nitrous acid, boric acid, carbonic acid, perchloric acid, acrylic acid, methacrylic acid, itaconic acid, maleic acid,
2-carboxyethyl acrylate, lactic acid, ascorbic acid, glycine, alanine, leucine, norleucine, phenylalanine, serine, taurine, valine, alpha-aminobutyric acid, palmitic acid, stearic acid, benzoic acid, mercaptoacetic acid, salicylic acid, pivalic acid, chloroacetic acid, dichloroacetic acid, trichloroacetic acid, citric acid, propionic acid, glycolic acid, 1-sulfonaphthalene, tartaric acid, phthalic acid, isophthalic acid, terephthalic acid, 5-sulfosalicylic acid, benzenesulfonic acid, cyclohexanecarboxylic acid, o-, m-, and p-toluic acid, o-, m-, and p-aminobenzoic acid, p-hydroxybenzoic acid, phenylacetic acid, methylbenzenesulfonic acid, butyric acid, valeric acid, oxalic acid, maleic acid, fumaric acid, malonic acid, succinic acid, glutaric acid, oleic acid, o-, m-, and p-chlorobenzoic acid, o-, m-, and p-bromobenzoic acid, anthranilic acid, o-, m-, and p-nitrobenzoic acid, adipic acid, caprylic acid, caproic acid, lauric acid, fluoroacetic acid, capric acid, myristic acid, methoxyacetic acid, dodecanesulfonic acid, dodecylbenzenesulfonic acid, ethylbenzenesulfonic acid, octanesulfonic acid, hexanesulfonic acid, polyacrylic acid, copolymers of acrylic, methacrylic, itaconic, maleic, and fumaric acids.

It is preferred that the tertiary amine groups are neutralized prior to or during dispersion of the polyurethane in water to some extent. In one embodiment, the extent of neutralization of the tethered and/or terminal tertiary amine group is >10%, in another embodiment >20, >25 or >30 mole %, and in more preferred embodiments the extent of neutralization is >45 or >60 mole %. In preferred embodiment, at least 80, at least 85, at least 90 or at least 95 mole % of the tertiary amino groups are neutralized. Any acid used in an amount up to one equivalent per total equivalents of tertiary amines (tethered or otherwise) in the prepolymer or urethane polymer will be considered neutralizing acid. Any acid used in excess of one equivalent per equivalent of total tertiary amines will be counted towards the amount of coagulating acid.

Neutralization of tertiary amino groups (tethered or terminal) provides some benefits over quaternization when the acid used in neutralization can be volatilized or otherwise removed from the film or dried version of the polyurethane dispersion. After removal of a volatile or removable acid component from a neutralized tethered and/or terminal tertiary amine, the dried version of the polyurethane becomes less cationic and less hydrophilic, facilitating making a dried polyurethane with less water adsorption.

Combinations of quaternization and neutralization can be used.

**Other Neutralizing Acids**

In one embodiment, non-volatile acids, which impart permanent neutralization, can be used alone or in combination with fugitive acids. Some acids can impart hydrophobicity. Examples include stearic, hydroxystearic, linoleic, dimerate, abietic, sorbic, perfluorooctanoic and other similar acids. Dextrol™ free-acid phosphate surfactants represent another group of such acids.

Acids also include those with more than one acid group such as citric, tartaric, dimerate, phthalic, trimellitic, pyromellitic, itaconic, maleic, fumaric, glutaric, adipic, 1,2,3,4-butanetetracarboxylic (BTCA), ethylenediaminetetraacetic (EDTA), ethylene glycol tetraacetic (EGTA), 1,2-bis(o-aminophenoxy)ethane-N,N,N',N'-tetraacetic (BAPTA), 2-phosphonobutane-1,2,4-tricarboxylic, 5-sulfoisophthalic (5-SIPA), aspartic, glutamic, polyacrylic, polymethacrylic, polyitaconic acids, copolymers of maleic and fumaric acids, Carbosperse™ and Solsperse™ dispersants (Lubrizol), levulinic acid in combination with adipic or other diacid dihydrazide, and so forth. Other suitable acids include the acids used in making polyester polyols described earlier. Other acids with additional secondary useful properties are described in WO 2012/058534 paragraph 0062.

**Coagulating Acids**

The pretreatment composition also includes a water soluble coagulating acid component selected from inorganic and organic acids (such as those described above for neutralizing acids) provided they have the required solubility such as phosphoric acid, $AlCl_3$, and $FeCl_3$, or their derivatives or water soluble carboxylic acid(s) or combinations thereof. As already discussed, they can be Brönsted or Lewis acids. They can be mineral acids such as sulfuric acid.

**Di- and Polyvalent Metal Salts**

Pretreatment includes one or more water soluble di- and/or polyvalent metal salts. For the purpose of this disclosure, water soluble will be defined as having solubility in water at 25°C of at least 10g/l, more desirably at least 25g/l and preferably at least 50g/l. Some metal salts might be colored species that may discolor and they would be less preferred in pretreatments for light colored printed images. Iron chloride is one metal salt that is slightly colored. In the pretreatment the metal salts are selected from water soluble salts of calcium, magnesium, aluminum, zinc, and zirconium. The preferred counterion (provided it provides water soluble salts) include nitrate ($NO_3^-$), sulfate ($SO_4^{2-}$), acetate, and

chloride ($Cl^-$). Preferred oxidation states for the above listed metal cations are $Ca^{2+}$, $Mg^{2+}$, $Al^{3+}$, $Zn^{2+}$, and $Zr^{4+}$. Preferred amounts of the polyvalent metal salts are desirably from about 20 parts per hundred parts by weight of urethane polymer (phr) to 500 parts, more desirably from 30 parts to 300 parts by weight per one hundred parts of urethane polymer, and preferably from 40 to 200 parts by weight per one hundred parts by weight of urethane polymer in the pretreatment. The water soluble di- and polyvalent metal salts help promote color intensity in subsequently applied ink applications to the pretreatment by colloidally destabilizing the ink dispersions.

**Active-Hydrogen Containing Compounds as Part of the Urethane**

The term "active-hydrogen containing" refers to compounds that are a source of active hydrogen and can react with isocyanate groups via the following reaction:

$$-NCO+H-X \rightarrow -NH-C(=O)-X$$

Such compounds typically range widely in molecular weight from 18 g/mol for water and 17 g/mol for ammonia to 10,000 g/mol. They are customary divided into two subclasses depending on their molecular weight: Polyols with number-average molecular weight from 500 to 10,000 g/mol and chain extenders with molecular weight from 18 to 500 g/mol. The extremes of the scale represent physical reality: High-molecular-weight polyols contribute to the soft segment and short chain extenders contribute to the hard segment of polyurethane; however, the exact position of the divider is somewhat arbitrary and can be moved depending on the circumstances. Both classes are reviewed below in more detail.

**Polyols**

The term "polyol" in the context of the present invention means any high molecular weight product ($M_n$ > 500 g/mol), typically referred to as a long-chain polyol, which has an active hydrogen that can be reacted with isocyanates and includes materials having an average of about two or more hydroxyl or other NCO-reactive groups per molecule.

Such long-chain polyols include polyether, polyester, polycarbonate, and polycaprolactone polyols. Other examples include polyamide, polyester amide, polyacetal, polythioether, polysiloxane, ethoxylated polysiloxane, halogenated polyester and polyether, polybutadiene, hydrogenated polybutadiene, polyisoprene, polyisobutylene, alkyd-modified and polythioether polyols, hydroxyl-containing acrylic and methacrylic polymers and copolymers, hydroxyl-containing epoxies, and the like, and mixtures thereof. Combinations of different types of polyols may be used.

The polyether polyols, polyester polyols and polycarbonate polyols are preferred.

**Polyether polyols** are obtained in known manner by reaction of starting compounds that contain reactive hydrogen atoms, such as water or the diols set forth for preparing the polyester polyols, with alkylene oxides, such as ethylene oxide, propylene oxide, butylene oxide, styrene oxide, tetrahydrofuran, epichlorohydrin, and mixtures thereof. Preferred polyethers include polytetrahydrofuran (PTHF) and poly(propylene glycol) (PPG). Examples include Terathane® PTHF polyols from Invista and Acclaim™ PPG diols with lower monol contents from Arco Chemical. Another example of polyether polyols is fluorine containing PolyFox® from Omnova. Polyether polyol can be branched.

Preferably polyether polyols provide less than 25 wt.%, more preferably less than 15 wt.% and most preferably less than 5 wt.% poly(ethylene oxide) units in the backbone (main chain) based upon the dry weight of final polyurethane, since such main-chain poly(ethylene oxide) units tend to cause swelling of polyurethane particles in the waterborne polyurethane dispersion and also contribute to lower in-use (under wet or high-humidity conditions) tensile strength of articles made from the polyurethane dispersion.

**The polyester polyols,** typically, are esterification products prepared by the reaction of organic polycarboxylic acids or their anhydrides with a stoichiometric excess of a diol. Examples of suitable polyols for use in the reaction include polyglycol adipates, polyethylene terephthalate polyols, polycaprolactone polyols, orthophthalic polyols, sulfonated polyols, and the like, and mixtures thereof.

The diols used in making the polyester polyols can be aliphatic, cycloaliphatic or aromatic and include alkylene glycols, e.g., ethylene glycol, 1,2- and 1,3-propylene glycols, 1,2-, 1,3-, 1,4-, and 2,3-butylene glycols, hexane diols, neopentyl glycol, 1,6-hexanediol, 1,8-octanediol, and other glycols such as bisphenol-A, cyclohexane diol, cyclohexane dimethanol (1,4-bis-hydroxymethylcycohexane), 2-methyl-1,3-propanediol, 2,2,4-trimethyl-1,3-pentanediol, 2-butyl-2-ethyl prorane-1,3-diol, Versatic™ alcohols produced from CARDURA E10P (Hexion), triethylene glycol, tetraethylene glycol, polyethylene glycol, dipropylene glycol, polypropylene glycol, dibutylene glycol, polybutylene glycol, caprolactone diol, dimerate diol, hydroxylated bisphenols, polyether glycols, halogenated diols, and the like, and mixtures thereof. Preferred diols include ethylene glycol, butylene glycol, hexane diol, and neopentyl glycol. A portion of the diol can be replaced with triol or polyol.

Suitable carboxylic acids used in making the polyester polyols include dicarboxylic acids and tricarboxylic acids and anhydrides, e.g., maleic acid, maleic anhydride, succinic acid, glutaric acid, glutaric anhydride, adipic acid, suberic

acid, pimelic acid, azelaic acid, sebacic acid, chlorendic acid, 1,2,4-butane-tricarboxylic acid, phthalic acid, the isomers of phthalic acid, phthalic anhydride, fumaric acid, tetrabromophthalic anhydride and acid, dimeric fatty acids such as oleic acid, and the like, and mixtures thereof. Preferred polycarboxylic acids used in making the polyester polyols include aliphatic or aromatic dibasic acids.

The preferred polyester polyol is a diol. Preferred polyester diols include hexane diol neopentyl glycol adipic acid polyester diol, e.g., Piothane™67-3000HNA (Panolam Industries) and Piothane 67-1000HNA; as well as propylene glycol maleic anyhydride adipic acid polyester diols, e.g., Piothane 50-10000PMA; and hexane diol neopentyl glycol fumaric acid polyester diols, e.g., Piothane 67-500HNF. Other preferred polyester diols include Rucoflex™ S1015-35, S1040-35, and S-1040-110 (RUCO Polymer Corp.).

**Polycarbonates** include those obtained from the reaction of diols such 1,3-propanediol, 1,4-butanediol, 1,6-hexanediol, diethylene glycol, triethylene glycol, tetraethylene glycol, and the like, and mixtures thereof with diarylcarbonates such as diphenylcarbonate, or phosgene.

**Polysiloxane polyols** are characterized by the presence of the -$R_1R_2$SiO-repeat units which can contain alkyl or aryl groups such as polydimethylsiloxanes, poly(dimethysiloxane-co-diphenylsiloxane)s, polydiphenylsiloxanes, poly(methylphenyl)siloxanes and the like, and combinations thereof. Examples include ethoxylated poly(dimethylsiloxane) (PDMS) Y-17256 from Momentive Performance Materials and side-chain PDMS diol MCR-C61 from Gelest.

**Polyacetals** include the compounds that can be prepared from the reaction of (A) aldehydes, such as formaldehyde and the like, and (B) glycols such as diethylene glycol, triethylene glycol, ethoxylated 4,4'-dihydroxy-diphenyldimethylmethane, 1,6-hexanediol, and the like. Polyacetals can also be prepared by the polymerization of cyclic acetals.

**Polyester amides and polyamides.** Instead of long-chain polyols, long-chain amines may also be used to prepare the isocyanate terminated prepolymer. Suitable long-chain amines include polyester amides and polyamides, such as the predominantly linear condensates obtained from reaction of polybasic saturated and unsaturated carboxylic acids or their anhydrides and polyvalent saturated or unsaturated aminoalcohols, diamines, polyamines, and mixtures thereof.

Diamines and polyamines are among the preferred compounds useful in preparing the aforesaid polyester amides and polyamides. Suitable diamines and polyamines include 1,2-diaminoethane, 1,6-diaminohexane, 2-methyl-1,5-pentanediamine, 2,2,4-trimethyl-1,6-hexanediamine, 1,12-diaminododecane, 2-aminoethanol, 2-[(2-aminoethyl)amino]-ethanol, piperazine, 2,5-dimethylpiperazine, 1-amino-3-aminomethyl-3,5,5-trimethylcyclohexane (isophorone diamine or IPDA), bis-(4-aminocyclohexyl)-methane, bis-(4-amino-3-methyl-cyclohexyl)-methane, 1,4-diaminocyclohexane, 1,2-propylenediamine, hydrazine, urea, amino acid hydrazides, hydrazides of semicarbazidocarboxylic acids, bis-hydrazides and bis-semicarbazides, diethylene triamine, triethylene tetramine, tetraethylene pentamine, pentaethylene hexamine, N,N,N-tris-(2-aminoethyl)amine, N-(2-piperazinoethyl)-ethylene diamine, N,N'-bis-(2-aminoethyl)-piperazine, N,N,N'tris-(2-aminoethyl)ethylene diamine, N-[N-(2-aminoethyl)-2-aminoethyl]-N'-(2-aminoethyl)-piperazine, N-(2-aminoethyl)-N'-(2-piperazinoethyl)-ethylene diamine, N,N-bis-(2-aminoethyl)-N-(2-piperazinoethyl)amine, N,N-bis-(2-piperazinoethyl)-amine, polyethylene imines, iminobispropylamine, guanidine, melamine, N-(2-aminoethyl)-1,3-propane diamine, 3,3'-diaminobenzidine, 2,4,6-triaminopyrimidine, polyoxypropylene amines, tetrapropylenepentamine, tripropylenetetramine, N,N-bis-(6-aminohexyl)amine, N,N'-bis-(3-aminopropyl)ethylene diamine, and 2,4-bis-(4'-aminobenzyl)-aniline, and the like, and mixtures thereof. Preferred diamines and polyamines include 1-amino-3-aminomethyl-3,5,5-trimethylcyclohexane (isophorone diamine or IPDA), bis-(4-aminocyclohexyl)-methane, bis-(4-amino-3-methylcyclohexyl)-methane, ethylene diamine, diethylene triamine, triethylene tetramine, tetraethylene pentamine, and pentaethylene hexamine, and mixtures thereof. Other suitable diamines and polyamines include Jeffamine™ D-2000 and D-4000, which are amine-terminated polypropylene glycols, differing only by molecular weight, and which are available from Huntsman Chemical Company.

## Chain extenders

Chain extenders with the molecular weight from 18 to 500 g/mol such as aliphatic, cycloaliphatic or aromatic diols, amines, or mercaptans can be used during the formation of the prepolymer and during the dispersion step of the process. Because the prepolymer is formed at elevated temperatures and in the general absence of water, the less reactive alcohol functionality is preferred for the prepolymer chain extension to provide for better control over the temperature and mixing.

On the other hand, during the dispersion stage of the process, if chain extenders are desired, they will compete with water for the reaction with the remaining NCO. In this case, the more reactive amine functionality is preferred.

For the prepolymer stage, the preferred chain extenders are the diol monomers used in making the polyester polyols described above. Any of the low-molecular-weight (less than 500 g/mol) polyols describes above may also be used as the prepolymer chain extenders.

In the most preferred embodiment of the present invention, no prepolymer chain extender is used.

As a dispersion chain extender, at least one of water, inorganic or organic polyamine having an average of 2

or more primary and/or secondary amine groups or combinations thereof is suitable for use in this invention. Suitable organic amines for use as a dispersion chain extender are the same diamines and polyamines described above as monomers for preparing polyester amides and polyamides.

Preferred amine dispersion chain extenders include ethylene diamine (EDA), diethylene triamine (DETA), triethylene tetramine (TETA), meta-xylylenediamine (MXDA), aminoethyl ethanolamine (AEEA), 2-methyl pentane diamine, and the like, and mixtures thereof. Also suitable for practice in this invention are propylene diamine, butylene diamine, hexamethylene diamine, cyclohexylene diamine, phenylene diamine, tolylene diamine, 3,3-dichlorobenzidene, 4,4'-methylene-bis-(2-chloroaniline), 3,3-dichloro-4,4-diamino diphenylmethane, sulfonated primary and/or secondary amines, and the like, and mixtures thereof.

Suitable inorganic amines include hydrazine, substituted hydrazines, and hydrazine reaction products, and the like, and mixtures thereof. Ammonia ($NH_3$), if used as a neutralizer during the dispersion step, can also contribute to the consumption of the remaining NCO during the dispersion stage with the formation of terminal urea.

Polyalcohols are less preferred but can be used. Examples include those having from 2 to 12 carbon atoms, preferably from 2 to 8 carbon atoms, such as ethylene glycol, diethylene glycol, neopentyl glycol, butanediols, hexanediol, and the like, and mixtures thereof.

Preferred dispersion chain extender is water.

The amount of chain extenders typically ranges from 0.3 to 1.1 equivalents based on available isocyanate.

### Water-Dispersibility Enhancing Compounds

Polyurethanes are generally hydrophobic and not water-dispersible. Therefore, at least one water-dispersibility enhancing compound (*i.e.*, monomer), which has at least one, hydrophilic, ionic or potentially ionic group is included in the polyurethane polymers and prepolymers of this invention to assist dispersion of the polymer/prepolymer in water. In one embodiment of the present invention, the tethered amine monomer or its salt is this water-dispersibility enhancing compound and its content is sufficient to prepare a stable dispersion without additional means.

In another embodiment of the present invention, an additional water-dispersibility enhancing compound can be used especially if the content of the tethered amine monomer or its salt is insufficient to prepare a stable dispersion without additional means or if significant amounts of polyvalent metal ions are included in the composition. These compounds may be of a nonionic, anionic, cationic or zwitterionic nature or the combination thereof. Carboxylic acids can be converted into cationic centers by post-polymerization reactions such as, for example, reaction of epoxy quaternary ammonium compounds with carboxylic group of dimethylol propionic acid.

Water-dispersibility enhancing compounds of particular interest are side chain nonionic hydrophilic monomers. Some examples include alkylene oxide polymers and copolymers in which the alkylene oxide groups have from 2-10 and preferably 2-3 or 4 carbon atoms as shown, for example, in U.S. Patent No. 6,897,281,

The amount of such side chain nonionic hydrophilic monomers can be as little as 1, 0.5 even 0.1% or less based on the weight of final polyurethane if enhanced colloidal stability is desired and as high as 6,10, or 15 wt.% based on the weight of the polyurethane of the polyurethane dispersion.

Preferred nonionic monomers are Tegomer® D-3403 from Evonik and Ymer™ N120 from Perstorp.

Additional suitable water-dispersibility enhancing compounds include, polyethylene glycol, and the like, and mixtures thereof.

The optimum content of the additional water-dispersibility enhancing compounds (such as side-chain nonionic monomers) depends on the amount of tethered amine monomer present, its degree of neutralization and/or quaternization and other target properties.

Although the use of low molecular weight water-dispersibility enhancing compounds is optional, dispersions of the present inventions can be prepared without them by using high-shear dispersing methods and stabilizing by cationic tertiary amine groups.

### Branching

Branching of the ultimate polymer product, as well as the prepolymer, can be optionally accomplished for aiding tensile strength and improving chemical resistance and resistance to creep - that is, recovery to that of or near its original length after stretching. In this regard, see U.S. Patent No. 6,897,281. The preferred prepolymer branching monomers are trimethylolpropane and glycerol. The preferred dispersion branching monomers are diethylene triamine (DETA) and triethylene tetramine (TETA).

### Crosslinkers

Compounds having at least one crosslinkable functional group can also be incorporated into the polyurethane

of the present invention, if desired. Examples of such compounds include those having carboxylic, carbonyl, amine, hydroxyl, epoxy, acetoacetoxy, olefinic and hydrazide groups, and the like, and mixtures of such groups and the same groups in protected forms which can be reversed back into original groups from which they were derived. Other suitable compounds providing crosslinkability include thioglycolic acid, 2,6-dihydroxybenzoic acid, melamine and its derivatives, multivalent metal compounds and the like, and mixtures thereof.

The amount of optional compounds having crosslinkable functional groups in the prepolymer will typically be up to about 1 milliequivalent, preferably from 0.05 to 0.5 milliequivalent, and more preferably from 0.1 to 0.3 milliequivalent per gram of final polyurethane on a dry weight basis.

**Catalysts**

Urethane prepolymer may be formed without the use of a catalyst but catalysis may be employed in some instances to reduce synthesis time or temperature. Examples of catalysts include organo-tin compounds, tertiary amines and transition metal compounds. Specific examples of suitable catalysts include stannous octoate, dibutyl tin dilaurate, and tertiary amine compounds such as triethylamine and bis-(dimethylaminoethyl) ether, morpholine compounds such as beta,beta-dimorpholinodiethyl ether, bismuth carboxylates, zinc bismuth carboxylates, iron (III) chloride, potassium octoate, potassium acetate and zirconium catalysts K-KAT® XC-9213 and K-KAT® 6212 from King Industries.

The preferred catalysts are DABCO® (diazabicyclo[2.2.2]octane), from Air Products, a mixture of 2-ethylhexanoic acid and stannous octoate, e.g., FASCAT® 2003 from Elf Atochem North America., and K-KAT™ XC-9213 from King Industries.

The amount of catalyst used to form the prepolymer will typically be from 5 to 200 parts per million of the total weight of prepolymer reactants.

The use of a catalyst is generally not necessary in the view that the tertiary amine compounds used in this invention act as catalysts.

**Reactive Crosslinking Moieties**

Reactive crosslinking moieties of the blocked isocyanate (e.g. MEKO) or 1,3-dicarbonyl compound type (e.g. DEM) allow for delivery of a two-component performance by a one-component system. The former are well known in the coatings industry as one of the top performers. Several types of compounds can be employed as blocking (a.k.a. protecting or masking) agents to provide crosslinking functionality to the urethane polymer and coating composition [Z. W. Wicks Jr. Progress in Organic Coatings, v. 3, pp. 73-99 (1975); D. Dieterich. Progress in Organic Coatings, v. 9, pp. 281-340 (1981); D. A. Wicks and Z. W. Wicks Jr. Progress in Organic Coatings, v. 43, pp. 131-140 (2001); D.K. Chattopadhyay and K.V.S.N. Raju. Prog. Polym. Sci., v. 32, pp. 352-418 (2007)]. Their function is to temporarily protect isocyanate groups from undesired reactions. The main requirement for the blocking compound is for its reaction with isocyanate to be reversible. When the reaction is reversed, the isocyanate group is regenerated and is available for further reactions. The reverse reaction can be triggered by physical or chemical means, for example, by elevated temperatures, radiation, vacuum, catalysts, compounds with active hydrogen, or combinations thereof. Malonates (such as DEM) are a variation on blocking compounds as they do block isocyanate groups from undesirable reactions such as with water, but when combined with hydroxyl-containing substrates, rather than deblock at higher temperatures during crosslinking, they react at lower temperatures to form a chemical bond with such reactive hydroxyls.

Examples of reactive crosslinking moieties (including blocking agents) include 1,3-dicarbonyl compounds, oximes and other N-hydroxyl compounds, phenols, alcohols, lactams, imidazoles, pyrazoles, acids, mercaptanes, imides, secondary amines, cyanoacetates, malononitrile and its derivatives, and sulfites. The preferred reactive crosslinking agent (including blocking agents) are 1,3-dicarbonyl compounds (dicarbonylmethanes) (U.S. Pat. No. 2,826,526). They are characterized by the presence of the following structural fragment anywhere in the molecule:

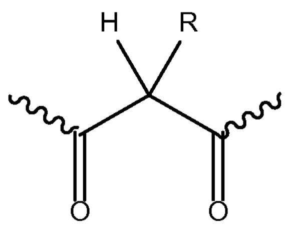

where R = H, alkyl, or any other group suitable for the purposes of the present invention. Examples include acetyl acetone and its derivatives, alkyl acetoacetates, alkoxyalkyl acetoacetates, barbituric acid and its derivatives. The reactive

crosslinking moiety may be reacted into the prepolymer and thereafter the polyurethane or it can be a separate isocyanate based compound/moiety (e.g. blocked polyisocyanate moiety or reaction product of a polyisocyanate and a 1,3-dicarbonyl compound) that reacts to crosslink the polyurethane or bind the polyurethane to a substrate.

A very important subgroup of the 1,3-dicarbonyl compounds is the derivatives of malonic acid such as diesters. A unique feature of the malonates is that, when a co-reactant or a substrate contains hydroxyl or amine groups, the reaction proceeds through transesterification or amidation route at lower than deblocking temperature [T. Fäcke, R. Subramanian, M. Dvorchak and S Feng. Proceedings of the 31st International Waterborne, High-Solids, and Powder Coatings Symposium, pp. 40-52, (2004)]. Depending on the reagent, dicarbonylmethane-blocked isocyanates can start to react at as low as 80°C which is much lower temperature than the temperature required for activation of other blocked isocyanates.

This reaction becomes a dominant route for substrates such as paper, cotton or rayon; wool and some synthetic fibers such as polyesters; and polyamides. Examples of suitable malonic acid esters include dialkyl malonates wherein each alkyl group has from 1 to 12 carbon atoms such as dimethyl malonate, diethyl malonate (DEM), dipropyl malonate, diisopropyl malonate, and higher esters, aromatic esters such as dibenzyl malonate, esters with heteroatom such as methyl malonatemonoamide, bis(trimethylsilyl) malonate, and alkoxyalkyl malonates, mixed esters such as benzyl ethyl malonate, ethyl trimethylsilyl malonate, 2,2-dimethyl-1,3-dioxane-4,6-dione (Meldrum's acid), and similar cyclic esters.

One of the two methylene hydrogens in 1,3-dicarbonyl compounds can be replaced with another substituent. Examples from the malonate family include dimethyl isobutyl malonate, diethyl ethylmalonate, diethyl butylmalonate, diethyl allylmalonate, diethyl (2-diethylaminoethyl)-malonate, diethyl chloromalonate, diethyl bromomalonate, diethyl 2-(2-nitro-1-phenylethyl)malonate, and diethyl 2-(4-nitrophenoxy)malonate. Mixtures of 1,3-dicarbonyl compounds may be used. Malonates are disclosed in prior art: GB 1,442,024 and US 6,891,012.

Oximes are another group of generally preferred blocking agents. Oximes can be represented by a general formula CRR'=NOH, where R and R' may independently be H or $C_nH_{2n+1}$. R and R' may also contain cycloaliphatic, aromatic groups, and groups with heteroatoms including heterocyclic groups. The oxime may be an aldoxime when one or both R and R' are hydrogen, or ketoxime when both R and R' are hydrocarbyl groups desirably alkyl groups having from 1 to 12 carbon atoms. Examples of aldoximes include formaldoxime, acetaldoxime, propionaldoxime, butyraldoxime, benzaldoxime and the like. Examples of ketoximes include acetoxime, butanone oxime, methyl ethyl ketoxime (MEKO), methyl isobutyl ketoxime, cyclopentanoneoxime, cyclohexanone oxime, acetophenone oxime and the like. 1,3-Dicarbonyl compounds and oximes can be used alone or in combination. They can be partially replaced by other blocking agents.

Other blocking agents include lactams, secondary and tertiary alcohols, phenols, pyrazoles, mercaptans, N-hydroxyl compounds and their mixtures. Some specific examples of other suitable blocking agents include triazole, tetrazole, imidazole, caprolactam, phenol and its derivatives such as esters of hydroxybenzoic acids, pyrazole, 3,5-dimethylpyrazole, dibutylamine, diisopropylamine, piperidine, piperazine, tert-butanol, cyclohexanol, isopropanol, glycerine carbonate, N-hydroxysuccinimide, hydroxypyridine, and esters of hydroxamic acid. Combinations of two or more blocking agents are preferred if a stepwise reaction is desired, particularly mixtures of blocking agents which deblock at different temperatures.

The isocyanate blocking reaction can be performed at virtually any stage of the PUD synthesis and is usually carried out at temperatures above 30°C. The reaction times vary and depend on temperature and type and concentration of isocyanate, blocking agent and other ingredients. The blocking reaction can be accelerated by the use of a catalyst. Suitable catalysts include Brönsted base and/or Lewis acid. Examples include the alkali metal alcoholates and phenolates and metal carboxylates.

The deblocking may occur during chain extension or during polymer drying and/or during a separate curing. Often it is preferred to use a blocking agent, which will evaporate from the polymer during drying or curing. In these cases, low molecular weight blocking agents such as dimethyl malonate, diethyl malonate, acetoxime, butanone oxime, butyraldoxime and the like are preferred.

Blocked isocyanates of the present invention may also be used in combination with other crosslinking chemistries such as summarized in "Functional Latex and Thermoset Latex Films" J.W. Taylor M.A. Winnik J. Coatings Tech., Research, v. 1, No. 3, p. 163 (2004). These include melamine-based crosslinkers, metal carboxylates, aziridines, carbodiimides, epoxides, unsaturated compounds, acetoacetoxy- and ketone-functional polymers and additives, enamine and amine crosslinking, isocyanates and self-blocked isocyanates, OH-functional polyesters and acrylates, acid-functional resins, and hydroxyalkylamides.

In general, the equivalent ratio of the blocking agent to all available isocyanates groups depends on the particular formulation and the targeted balance of the properties. Up to a stoichiometric amount is usually used but excess of the blocking agent may be used to achieve higher isocyanate blocking levels for the blocking agents with low reactivity. As little as 0.01 equivalent of the blocking agent per one equivalent of isocyanates can show performance benefits. Preferably more than 0.02 equivalents are used, and most preferred level is at least 0.05 equivalent of the blocking agent per one equivalent of isocyanates. Normally, no more than 0.5 equivalents are needed to achieve the maximum effect, preferably no more than 0.4 and most preferably no more than 0.3. It is preferred that the blocking reaction is driven to completion,

but for blocking agents with low reactivity as little as its 20% or even 10% conversion can be enough to see the performance benefits. When using 1,3-dicarbonyl compounds (as opposed to more conventional isocyanate blocking agents), such as DEM, to impart reactive crosslinking, the equivalents of the 1,3-dicarbonyl compound would be the same amounts as recited above for conventional blocking agents.

**Solvents**

Solvents, which are nonreactive to any significant extent in the context of the urethane-making reactions, may be used in the present invention but are not preferred because they introduce volatile organic component (VOC). The use of a solvent may be desirable to reduce the prepolymer viscosity, provide a heat sink, serve as refluxing medium and assist with film formation. Examples of solvents include substituted pyrrolidinones, amides, esters, ethers, ketoesters, ketones, glycolether-esters, hydrogenated furans, tertiary alcohols, aromatic and aliphatic hydrocarbons, chlorinated hydrocarbons, and the like, and mixtures thereof.

Specific examples include N-methyl-2-pyrrolidinone (NMP), N-ethyl-2-pyrrolidinone, dimethylformamide, dimethylacetamide, acetone, methylethyl ketone, diisobutyl ketone, isobutylheptyl ketone, dimethylsulfoxide, N-methyl caprolactam, N-methyl valerolactam, ethylene glycol monomethyl ether formal, and dipropylene glycol dimethyl ether.

The amount of solvent can vary in a broad range depending on the specifics of the polymer to be produced. 0.1 to 50 parts by weight of solvent per 100 parts by weight of the prepolymer can be used.

Solvents with a higher boiling point than water generally remain with the aqueous dispersion and facilitate the coalescence of the polymer particles during drying and film formation.

In some cases, it is desirable to remove at least a portion of the solvent from the dispersion. It can be done with solvents which have a lower boiling point than water or form an azeotrope. These solvents can be removed from the dispersion by, for example, distillation, vacuum distillation, aseotropic distillation and thin-film evaporation.

**Plasticizers**

Plasticizer can optionally be used in order to render the viscosity of the polyurethane prepolymer low enough to process it as taught in US 6,576,702 in columns 7-10, or to prevent the prepolymer from freezing during the dispersion step. The plasticizer can be added at any time during prepolymer preparation or before the prepolymer is dispersed in water, e.g., separately or as a mixture with one or more reaction components prior to prepolymer preparation. They can also be added after the dispersion is formed.

**Coalescents**

Boiling point of coalescents is between those of solvents and plasticizers and is higher than boiling point of water. There is some overlap in these three categories and the division is somewhat artificial; in fact, solvents, coalescents and plasticizers form a continuum of boiling points. Coalescents tend to evaporate slower than water and remain with the polymer for an extended period of time facilitating film formation; however, at the end, they, like water, eventually also migrate out of the final product.

Examples of coalescent include ethylene glycol mono 2-ethylhexyl ether (EEH), dipropylene glycol monobutyl ether (DPnB), ethylene glycol monobutyl ether acetate (EBA), diethylene glycol monobutyl ether (DB), ethylene glycol monobutyl ether (EB), dipropylene glycol monomethyl ether (DPM), diethylene glycol monomethyl ether (DM).

**Miscellaneous Additives**

The polyurethane prepolymer, the product polyurethanes produced therefrom, and the aqueous prepolymer particle dispersions of the present invention as described above can be made with various additional ingredients and features in accordance with known polyurethane technology. Such additives include surfactants, stabilizers, defoamers, antimicrobial agents, antioxidants, rheology modifiers and the like and the mixtures thereof. They can optionally be added as appropriate before and/or during the processing of the dispersions of this invention into finished products as is well known to those skilled in the art.

**Auxiliary Additives**

A specific subclass of additives preferred in the context of the present invention is auxiliary additives which enhance the cationic nature and performance of the cationic urethanes. These include pigments, mordants, cationic and nonionic surfactants, fixatives, and water soluble polymers.

Thus, for ink-jet printing applications, one or more inorganic or organic pigments and/or resin particles can be

incorporated in order to provide the ink-receptive layer with improved ink absorbency, dye fixability, dye-color-producing ability, blocking resistance and water resistance. Such pigments include mineral or porous pigments: kaolin, delaminated kaolin, aluminum hydroxide, silica, diatomaceous earth, calcium carbonate, talc, titanium oxide, calcium sulfate, barium sulfate, zinc oxide, alumina, calcium silicate, magnesium silicate, colloidal silica, zeolite, bentonite, sericite and lithopone. Resin particles and porous particles of plastic pigments include polystyrene, urethane, urea, acrylic, melamine and benzoguanamine resins as well as hollow and porous particles composed of these resins.

Examples of water-soluble polymers include poly(vinyl alcohol) and derivatives, partially hydrolyzed poly(vinyl acetate), starch, oxidized starch, partially fermented starch, etherified starch, cellulose derivatives such as carboxymethylcellulose and hydroxyethylcellulose, casein, gelatin, soybean protein, high-acid-number acrylic, styrene-acrylic, styrene-maleic acid and diisobutylene-maleic acid copolymers, poly(diallyldimethylammonium chloride), poly(vinyl pyridine) and poly(vinyl pyrrolydone).

Additional quaternary ammonium compounds and surfactants are described by M. Dery in Kirk-Othmer Encyclopedia of Chemical Technology, 4th Edn, 1996, Vol. 20, pp. 739-767.

Examples of mordants include polyethyleneimines, polyamines and condensates of dicyandiamide.

In addition, one or more of various other additives can also be incorporated in the ink-receptive coating. These additives include thickening, parting, penetrating, wetting, thermal gelling, sizing, defoaming, antifoaming and blowing agents. Other additives include colorants, fluorescent whiteners, ultraviolet absorbers, oxidation inhibitors, quenchers, antiseptic agents, antistatic agents, crosslinking agents, dispersants, lubricants, plasticizers, pH adjusters, flow and leveling agents, setting promoters, and waterproofing agents.

In the pretreatment one particularly preferred component is a surface active agent or spreading agent. This is typically a nonionic surfactant, cationic surfactant, and/or mono or polyhydric alcohol. Preferred monohydric or polyhydric alcohols for this purpose include those with a molecular weight from 32 to 100 or 200 g/mole. Ethanol and isopropanol are preferred. These are typically used at concentrations from 1 or 2 to 10 or 15 parts by weight per 100 parts by weight of the pretreatment.

**Blends with Other Polymers**

The dispersions of this invention can be combined with compatible polymers and polymer dispersions by methods well known to those skilled in the art. Such polymers, polymer solutions, and dispersions include those described in A. S. Teot. "Resins, Water-Soluble" in: Kirk-Othmer Encyclopedia of Chemical Technology. John Wiley & Sons. 3rd Edn., Vol. 20, H. F. Mark et al. Eds., pp. 207-230 (1982).

**Hybrids (vinyl/acrylic)**

Ethylenically unsaturated monomers and other free radically polymerizable monomers can be polymerized by conventional free radical sources to form a vinyl and/or acrylic polymer within the polyurethane particle to form a hybrid acrylic-urethane dispersion. Vinyl polymers is a generic term for polymers derived from substantial portions of unsaturated monomers or polymers derived from those monomers. Acrylic (often considered a subset of vinyl) will refer to acrylic acid, acrylates (being esters of acrylic acid), and alkacrylates such as methacrylates and ethacrylates and polymers therefrom. Additional free-radically polymerizable material (unsaturated monomers) may be added to the vinyl or acrylic monomers to copolymerize. These other monomers can be monomers such as maleic anhydride, maleic acid, and other monomers where the carbon-carbon double bond is nearly as reactive (and copolymerizable with) as a ethylenically unsaturated monomers. Dienes are considered ethylenically unsaturated and copolymerize with both the broad category of vinyl monomers and narrow category of acrylic monomers. It is anticipated that most of the monomers (e.g. >50 wt.%, more desirably >75 wt.% and preferably >85 wt.% of the total free-radically polymerizable monomers) will be vinyl or in narrower embodiments the acrylic monomers.

The polymerization within the polyurethane particles can be done by forming the aqueous dispersions of polyurethane composite and then polymerizing additional monomers by emulsion or suspension polymerization in the presence of these dispersions. Another way of making hybrid polymers is to include ethylenically unsaturated monomers in the polyurethane prepolymer (either with the reactants to form the prepolymer and/or any time before the urethane prepolymer is dispersed) and to cause these monomers to polymerize before, during and/or after the prepolymer is dispersed in aqueous medium. In one embodiment, the weight percent of polymer(s) from vinyl monomers based on 100 parts of combined urethane and vinyl (or acrylic in narrower embodiments) will be at least 1, 5, or 10 weight percent with the complementary amount of urethane prepolymer or polymer to make 100 parts by weight total. In another embodiment, where small amounts of urethane prepolymer or polymer are desired, the urethane prepolymer or polymer is at least 0.1, 0.5, 1, 5 or 10 weight percent of the combined weight and the vinyl (or acrylic in narrower embodiments) polymer is the complementary amount.

In one approach, the ethylenically unsaturated monomers act as a diluent during prepolymer formation. When

the vinyl monomers are used as a diluent for the polyurethane component then the vinyl monomers will be from about 5 or 10 weight percent to about 50 weight percent of the combined weight of the polyurethane and vinyl component (monomer or polymer, depending on whether polymerization has occurred or not). Hybrids of polyurethanes of this invention with and acrylics can be made by any of these approaches. This type of technology is taught in U.S. Patent 4,644,030; U.S. Patent 4,730,021; U.S. Patent 5,137,961; and U.S. Patent 5,371,133. Another urethane-acrylic hybrid is often known as synthetic alloy urethane-acrylic where a urethane polymer is dispersed into a waterborne polymer dispersion or emulsion. This is taught in WO 98/38249 and U.S. Patent 6,022,925.

**Processes**

Aqueous dispersions of polyurethane particles are made in accordance with this invention by forming the polyurethane prepolymer in the substantial absence of water and then dispersing this prepolymer in aqueous medium. This can be done in any fashion. Typically, prepolymer formation will be done by bulk or solution polymerizing the ingredients of the prepolymer.

Once the polyurethane prepolymer mixture is formed, it is dispersed in an aqueous medium to form a dispersion or a solution. Dispersing the prepolymer in aqueous medium can be done by any conventional technique in the same way that other polyurethane prepolymers made by bulk or solution polymerization are dispersed in water. Normally, this will be done by combining the prepolymer blend with water with mixing. Where solvent polymerization is employed, the solvent and other volatile components can optionally be distilled off from the final dispersion, if desired. Where the prepolymer includes enough water-dispersibility enhancing compound (such as cationic and optional nonionic monomers) to form a stable dispersion without added emulsifiers (surfactants), the dispersion can be made without such compounds, i.e., substantially free of surfactants, if desired. The advantage of this approach is that the coatings or other products made from the polyurethane exhibit less water sensitivity, often better film formation and less foaming.

Additional benefit of the compositions of the present invention over those disclosed in US 6,140,412 is the significantly higher solids content possible.

In one embodiment, the pretreatment solution of this invention typically has total solids (i.e., residues after oven drying at 105°C for 1 hour) of at least about 5, 8 or 10 wt.% based on the weight of the pretreatment. Solids content and binder loading are a compromise of desiring high component loading and wanting good colloidal stability. In one embodiment, the pretreatment solution will have total solids of less than 25, 20, 15, or 10 wt.%. In one embodiment, the binder (polyurethane) portion of the pretreatment solution will desirably be at least 2, 3, or 4 wt.% of the solution. In one embodiment, the binder portion will be less than 25, 20, 15 or 10 wt.% of the pretreatment solution.

The dispersions of this invention can be formed by dispersing the tethered amine prepolymer mixture in a previously formed aqueous dispersion of another polymer or polymers. In other words, the aqueous medium into which the prepolymer mixture is dispersed in accordance with the present invention can itself be a previously formed aqueous dispersion of another polymer or polymers including those made by emulsion and suspension polymerization techniques.

Other known ways of making aqueous polyurethane dispersions can also be used to make the dispersions of this invention. Their review can be found in several publications including by D. Dieterich in Progress in Organic Coatings, vol. 9, pp. 281-340 (1981). Examples of the processes include:

Shear Mixing - Dispersing the prepolymer by shear forces with emulsifiers (external emulsifiers, such as surfactants, or internal emulsifiers having nonionic, cationic and/or zwitterionic groups as part of or pendant to the polyurethane backbone, and/or as end groups on the polyurethane backbone).

Acetone process - A prepolymer is formed with or without the presence of acetone, MEK, and/or other polar solvents that are non-reactive and easily distilled. The prepolymer is further diluted in said solvents as necessary, and chain extended with an active hydrogen-containing compound. Water is added to the chain-extended polyurethane, and the solvents are distilled off. A variation on this process would be to chain extend the prepolymer after its dispersion into water.

Melt dispersion process - An isocyanate-terminated prepolymer is formed, and then reacted with an excess of ammonia or urea to form a low molecular weight oligomer having terminal urea or biuret groups. This oligomer is dispersed in water and chain extended by methylolation of the biuret groups with formaldehyde.

Ketazine and ketimine processes - Hydrazines or diamines are reacted with ketones to form ketazines or ketimines. These are added to a prepolymer, and remain inert to the isocyanate. As the prepolymer is dispersed in water, the hydrazine or diamine is liberated, and chain extension takes place as the dispersion is taking place.

Continuous process polymerization - An isocyanate-terminated prepolymer is formed. This prepolymer is pumped through high shear mixing head(s) and dispersed into water and then chain extended at said mixing head(s), or dispersed and chain extended simultaneously at said mixing head(s). This is accomplished by multiple streams consisting of prepolymer (or neutralized prepolymer), optional neutralizing agent, water, and optional chain extender and/or surfactant.

Reverse feed process - Water and optional neutralizing agent(s) and/or extender amine(s) are charged to the

prepolymer under agitation. The prepolymer can be neutralized before water and/or diamine chain extender is added.

The polymers of the present invention can also be prepared by the two-prepolymer process leading to the formation of the core-shell and other morphologies as described in US 7,582,698.

## Applications

The compositions of the present invention and their formulations are useful as pretreatments for textiles or garments to enhance digital image printing. In addition to textile fibers, the fibers can include fiberglass fibers. When we refer to the pretreatment on a textile or fabric as a coating, we mean that the pretreatment forms a partial and/or complete coating on the fibers or substrate and not necessarily an impervious film (more impervious films for liquids occur when coating smooth metal, plastic or wood). Pretreatments are often applied by spraying or padding. When the pretreatment is applied by padding, it may approach completely surrounding each fiber or group of fibers. The pretreatment may not completely cover each and every fiber when applied by spraying (especially fibers deep in the textile or cloth or in situations where fibers cross each other). Generally, on textiles and cloth, it is desired that the substrate after pretreatment is as porous to water or air as the untreated substrate (which requires the coated textile to have lots of pores). Without being bound to the exact numerical value, the following values for coating parameters are typical targets or levels on various fabrics or garments and as desirable L* values and ΔE* values (ΔE* being the difference in the L* value from washing). L*a*b* values are according to CIELAB or more strictly CIE 1976.

| Substrate | Dry Pretreatment as a wt.% of substrate weight. | White ink wet as wt.% add on to wt. of pretreated dark (black) fabric | Target L* value to be achieved by white ink | Target ΔE* value |
|---|---|---|---|---|
| Polyester | 20-35 | 50-80 | >70, >75 | <6 |
| Cotton | 15-30 | 45-60 | >80 | <6 |
| Polyester/ Cotton blend | 15-35 | 45-80 | >70, >75 | <6 |

Prior art fabric pretreatments were able to achieve L* values on dark colored cotton fabrics with white inks of >80 and delta Evalues of <5 but were generally not able to reach L* values of >80 on dark polyester fabrics using white ink. Depending on the percentage of cotton and polyester in cotton/polyester blends (higher cotton levels resulting in higher L* values), the achievement of L* values of >80 was difficult or impossible. ΔE* values (the decrease in the L* value after washing) are only significant to users if a high initial whiteness is achieved (L* value >70, >75, or >80) as fading isn't a critical parameter if the initial image has poor color intensity. An object of this disclosure was to develop a pretreatment for dark polyester fabrics (a popular t-shirt substrate) that could achieve a high level of whiteness with white inks and have a low delta Evalue upon washing. Thus, it is desirable that the L* value after washing is at least 70, 71, 72, 73, 74, 75, 76, 77, 78, 79 or 80.

In most commercial uses of fabric or garment pretreatments, the pretreatment would be applied to full-sized T-shirts with a DTG pretreatment machine (DTG Pretreat-R Gen. II, such as sold by Colman and Company of Tampa, FL). In this type of commercial pretreatment equipment the pretreatment solution is applied through an array of nozzles covering the width of the T-shirt. The T-shirt fabric generally is mounted on a stage. The stage moves past the nozzle array to expose the fabric to the pretreatment.

Preferred substrates for the pretreatment of this disclosure are garments or textiles for which some image (preferably digitally applied) is desired for labeling, decoration, advertising, etc. Preferred substrates are shirts with t-shirts and sport shirts being a suitable use. Substrates also include synthetic polymer films, such as might be used for banners, posters, advertising, etc. and may be films, woven, or non-woven. In one embodiment, the polymer substrate or film is a polyolefin, such as polypropylene, or a polyester. In one embodiment, woven or non-woven substrates are at least 25, 50 or 80 wt.% cotton, based on the weight of the fabric or substrate. In another embodiment, woven or non-woven substrates desirably have at least 25, 50, or 80 wt.% polyester based on the weight of the fabric or substrate. In some applications, the substrate can be fiberglass and/or paper.

## WORKING EXAMPLES

In these examples, the following reagents were used:

Acetic acid, glacial, from EMD

BYK®-347 - surfactant available from Byk Chemie in Europe
DeeFo® 97-3 - defoamer from Ultra Additives
DEM -diethyl malonate from Aldrich Chemical
H12MDI - 1,1'-methylenebis-(4-isocyanato cyclohexane) from Bayer Corporation as Desmodur® W
IPA - isopropyl alcohol
IPDI - isophorone diisocyanate from Bayer Corporation.
Jeffcat® DPA - 3-dimethylaminopropylamino-1,1'-bis-(propan-2-ol) from Huntsman
MEKO -methylethyl ketoxime (2-butanone oxime) from TCI
N-MeDEA - N-methyl diethanolamine from Alfa Aesar
Phosphoric acid - 85% solution from Sigma-Aldrich
PTHF 1000 - polytetrohydrofuran (average Mn = 1,000 g/mol), Terathane® 1000 from Invista
Tegomer® D-3403 - trimethylolpropane monoethoxylate methyl ether (Mn = 1,220 g/mol) from Evonik.
Xanthan Gum - multipurpose thickener from Jungbunzlauer Inc., Newton Centre, MA

## EXAMPLES FOR CATIONIC POLYURETHANES

**Polyurethane Dispersion Example A** (not according to the invention) PTHF 1000 (1,536 grams), H12MDI (747 grams) and IPDI (633 grams) were reacted at 215-225°F (102-107°C) under a blanket of dry nitrogen for about an hour. The reaction mixture was cooled to 170°F (77°C), and 314 grams JeffcatTM DPA were added. The reaction mixture was stirred at 175-185°F (79-85°C) for 40 minutes to produce an NCO-terminated prepolymer. The mixture was cooled to 145°F (63°C), and 69 grams of glacial acetic acid were added over 15 minutes with agitation. A portion (3,060 grams) of the partially neutralized prepolymer was added with mixing to 4,000 g water at 65°F (18°C), which contained 98 grams of glacial acetic acid and 5 grams of DeeFo 97-3, over the course of about 10-15 minutes to form an aqueous dispersion of cationic NCO-terminated polyurethane prepolymer. The remaining NCO was allowed to react with water overnight thereby producing a clean (no coagulum and floc) stable aqueous dispersion of cationic polyurethane having the following properties: total solids content - 43.6%, a pH 4.7, and Brookfield viscosity - 70 mPa·s (cP). Mean diameter of particle size distribution was 26 nm (measured by Malvern and reported as intensity-average Gaussian distribution). Weight-average molecular weight was measured at 42,500 g/mol. Ultimate tensile was measured at 25.9 MPa (3,750 psi) (standard deviation 1.17 Mpa (170 psi (1.17 MPa)),
elongation at break - 620% (standard deviation = 30%), and modulus at 100% elongation - 7.07 MPa (1,025 psi) (standard deviation = 0.241 MPa (35 psi)).

**Polyurethane Dispersion Examples B-F**

The syntheses of the inventive NCO-blocked PUDs were conducted the same way as in Example A. Tegomer® D3403 (if used) was charged together with PTHF1000, and the blocking agent (MEKO or DEM) was added at ~175-185°F (79-85°C) and mixed for -10 minutes after Jeffcat™ DPA was reacted. The ingredients and their amounts (in grams) used and the properties of the obtained clean and stable aqueous dispersions of blocked cationic polyurethanes are listed in the table below.

**Table 1: Polyurethane Dispersions later formulated into Pretreatment Compositions**

| Ingredient | Dispersion A | Dispersion B | Dispersion C | Dispersion D | Dispersion E | Dispersion F |
|---|---|---|---|---|---|---|
| PTHF 1000 | 1536 | 279 | 237 | 213 | 226 | 700 |
| Tegomer™ D3403 | - | - | - | 18 | 18 | 59 |
| H12MDI | 747 | 136 | 149 | 148 | 148 | 488 |
| IPDI | 633 | 115 | 127 | 125 | 125 | 413 |
| Jeffcat™ DPA | 314 | 57 | 59 | 56 | 56 | 183 |
| MEKO | - | - | 15 | - | 16 | - |
| DEM | | 31 | - | 34 | - | 114 |
| Acetic acid | 69 +98 | 13 + 11 | 13 + 12 | 12 + 11 | 12 + 11 | 40 + 80 |
| Phosphoric acid | - | 2.4 | 2.4 | 2.3 | 2.3 | 10 |
| Prepolymer portion dispersed | 3060 | 430 | 400 | 410 | 410 | 1800 |

(continued)

| Ingredient | Dispersion A | Dispersion B | Dispersion C | Dispersion D | Dispersion E | Dispersion F |
|---|---|---|---|---|---|---|
| DeeFo™ 97-3 | 5 | 0.6 | 0.6 | 0.6 | 0.6 | 3 |
| Water | 4000 | 660 | 615 | 630 | 620 | 2550 |
| Total solids, % | 43.6 | 38.4 | 42.3 | 38.8 | 39.1 | 40.2 |
| pH | 4.7 | 5.9 | 6.4 | 6.5 | 7.1 | 6.6 |
| Brookfield visc. mPa·s (cP) | 70 | 50 | 60 | 60 | 45 | 75 |
| Particle size, nm | 26 | 31 | 34 | 33 | 31 | 33 |
| Base # mgKOH/g polymer | 50 | 48 | 52 | 48 | 49 | 48 |
| Base number is the mass of potassium Hydroxide (KOH) in milligrams that would be required to neutralize one gram of polymer if nitrogen were an acid. | | | | | | |

**Comparative Examples G and H**

A similar procedure as in Dispersion A was used except that N-methyl diethanolamine was used instead of Jeffcat™ DPA. This illustrates the enhanced colloidal stability of cationic polyurethanes with tethered tertiary nitrogen (Polyurethane Dispersion Example A) as compared to cationic polyurethanes with backbone tertiary nitrogen (Polyurethane Dispersion Examples G and H). The following ingredients and amounts were used.

**Table 2a: Polyurethane Dispersions**

| Ingredient | Weight, g | |
|---|---|---|
| | Example G | Example H |
| PTHF 1000 | 110g | 194 |
| H12MDI | 209 | 179 |
| IPDI | 177 | 152 |
| N-MeDEA | 87 | 62 |
| Acetic acid | 18 + 16 | 13+11 |
| Prepolymer portion dispersed | 400 | 390 |
| Phosphoric acid | 3.2 | 2.3 |
| DeeFo™ 97-3 | 0.6 | 0.6 |
| Water | 600 | 820 |
| Total solids content, % | 36.6 | 33.9 |
| pH | 5.8 | 5.6 |
| Brookfield viscosity,(cP) mPa·s | 34 | 35 |
| Mean diameter of particle size distribution, nm (Malvern) | 185 | 283 |
| Coagulum by 75 µm filter | 0.5 | 0 |
| Colloidal stability | ~ 5 mm settling after 3 months at ambient | |
| Base Number mgKOH/g polymer | 70 | 50 |
| The stability of the inventive PUDs versus comparative PUDs is shown in Table 2b. | | |

**Table 2b: Sensitivity of Comparative Examples G and H to Colloidal Destabilization with Divalent Metals.**

| | Dispersion Example A | Dispersion Example G | Dispersion Example H |
|---|---|---|---|
| | 100g Dispersion Ex. A at 5.5 wt.% solids | 100g Dispersion Example G at 5.5 wt.% solids | 100g Dispersion Example H at 5.5 wt.% solids |
| Citric acid 20wt.% in water | 8.91g | 8.91 | 8.91 |
| $CaCl_2$ at 42.7 wt.% solids | 17.9g | 17.9 | 17.9 |
| Result | Colloidally stable | Coagulated | Coagulated |

**Polyurethane Dispersion Example I**

This example is similar to Examples A-F but uses one intervening carbon in the tether link. PTHF 1000 (47 grams), Tegomer® D 3403 (6.5 grams, Evonik), diethyl malonate (12.5 grams), H12MDI (69 grams) and IPDI (58 grams) were reacted at 215-225°F (102-107°C) under a blanket of dry nitrogen with agitation for about 1.5 hours. The reaction mixture was cooled to 160°F (71°C), and 22 grams 3-(dimethylamino)-l,2-propanediol (Aldrich, 98%) were added. The reaction mixture was stirred at 170-180°F (77-82°C) for about 2.5 hours to produce an NCO-terminated prepolymer. The mixture was cooled to 140°F (60°C), and 4.4 grams of glacial acetic acid were added. A portion (170 grams) of the partially neutralized prepolymer was added with mixing to 245 grams of water at 56°F (13°C), which contained 4.6 grams of glacial acetic acid, 0.9 grams of phosphoric acid, and 0.25 grams of DeeFo 97-3, over the course of about 5 minutes to form an aqueous dispersion of cationic NCO-terminated polyurethane prepolymer. The remaining NCO was allowed to react with water overnight thereby producing a clean (no coagulum and floc) stable aqueous dispersion of cationic polyurethane having the following properties: total solids content - 36.2%, a pH 6.1, and Brookfield viscosity - 24 mPa·s (cP). Mean diameter of particle size distribution was 119 nm (measured by Malvern and reported as intensity-average Gaussian distribution). This urethane could be used instead of any of Examples A-F to make a pretreatment according to this invention.

**RECIPES FOR PRETREATMENT COMPOSITIONS USING CATIONIC POLYURETHANES AND CONTROL PRETREATMENTS**

Procedure for Making Pre-treatments

Cationic polymers were generally diluted to 5.5wt.% solids before formulation. Some other components were also diluted as noted in the tables below. If diluted, the diluent was water unless otherwise specified. Typically, 100 grams of 5.5% solids cationic polymer was adjusted to pH 4.0 using an acid. Then one would add the metal cation solution. Dilute Xanthan gum was added if thickening was desired. The blend was allowed to mix for 15 minutes or until the Xanthan gum has gone into solution. Dilute IPA (50% in water used to promote spreading) was added if desired. Dilute Byk-347 (10% active in water) was added. The approximate total solids for most pretreatments is 13-14% and the total batch size for most pretreatments was approximately 130 +/- 10 g.

## Table 3: Pretreatment Solutions

| | Comparative Pretreatment 1 | Inventive Pretreatment 2 | Inventive Pretreatment 3 | Inventive Pretreatment 4 | Inventive Pretreatment 5 | Inventive Pretreatment 6 | Inventive Pretreatment 7 | Comparative Pretreatment 8 |
|---|---|---|---|---|---|---|---|---|
| Dispersion A Sancure 20051 added at 5.5 wt.% solids | 100g | x | x | x | x | x | x | x |
| Dispersion B, 20051+DEM added at 5.5 wt.% solids | x | 100 | 100 | 100 | 100 | x | x | x |
| Dispersion E 20051 +3% EO+MEKO added at 5.5 wt.% solids | x | x | x | x | x | 100 | x | x |
| Dispersion D 20051+DEM+3%EO added at 5.5 wt.% solids | x | x | x | x | x | x | 100 | x |
| Dispersion H 20051+non-tethered amine at 5.5 wt.% | x | x | x | x | x | x | x | 100 |
| Citric Acid dilute to 20wt% active | 32phr | x | x | x | x | 32 | 32 | x |
| $AlCl_3$ 100% | x | 49phr | 49 | 49 | x | x | x | x |
| Acetic acid 100% | x | x | x | x | 139 | x | x | 32phr |
| $CaCl_2$ at 42.7 wt.% solids | 139phr | x | x | x | 139 | 139 | 139 | 139 |
| $CaCl_2$ 100% | x | 98phr | 49 | 49 | x | | x | x |
| $MgCl_2$ 100% | x | x | 49phr | x | x | x | x | x |
| $Ca(NO_3)_2$ 100% | x | x | x | 49 phr | x | x | x | x |
| Xanthan Gum 0.5wt% | 1.85g | x | 2 | 2 | x | 1.85 | 1.85 | 1.85 |
| IPA at 50wt% active | 5.75g | 2 | 2 | 2 | 2 | 5.75 | 5.75 | 5.75 |
| Byk-347 at 10 wt.% active | 0.28g | 0.3 | 0.3 | 0.3 | 0.3 | 0.28 | 0.28 | 0.28 |

Comparative Pretreatment 8 coagulated (similar to results on its precursor Polymer H) before it could be tested.

**Padding method for applying pretreatment**

The pretreatment was applied to fabric pieces for most of the examples with a padding method commonly used in the textile industry. The fabric was soaked into the pretreatment solution for 3 minutes or until the fabric was completely saturated. The fabric was then passed through a nip (at 0.207 MPa (30 psi)) formed by a rubber covered bottom roll and a steel top roll of a two roll wringer to remove the excess coating from the fabric. The sample was then dried and cured in a heated garment press (Insta™ Model #715 Cerritos, CA). Curing instructions are shown in Table 4. A similar or identical curing used for white and colored inks even though they are not applied by padding but rather by spraying or by digital printing.

**Table 4: Fabric Pretreatment and Ink, Temperature, Duration and Pressure**

| Fabric | Temp °C | Duration | | Pressure |
|---|---|---|---|---|
| | | Pretreatment | Colored Ink | |
| Polyester | 140 | 30 sec | 3 min | 0.276 MPa (40 psi) |
| Polyester/Cotton blend (PES/COT) | 140 | 1 min | 3 min | 0.276 MPa (40 psi) |
| Cotton | 160 | 1 min | 3 min | 0.276 MPa (40 psi) |
| All pressures in this specification are gauge pressures, Gauge pressures mean pressure above 0.103 MPa (15 psi) of atmospheric pressure at sea level. | | | | |

The coating add-on percentage was determined by weighing the fabric before and after the pretreatment application by conditioning the fabric in a constant temperature/constant humidity room 21.1 °C ((70 °F)/50%RH) overnight. In general, the pretreatment add-on was 30-35% on polyester, 20-25% on a polyester/cotton blend and 15-20% on cotton.

**Spraying method for applying pretreatment**

If an example indicates pretreatment by spraying, the pretreatment was applied to full-sized T-shirts by spraying. A conventional-style pneumatically-powered air-spray gun from BINKS (model # 2001; www.binks.com) was used. See Table 5 for application guidelines. The pretreatment was more frequently applied by padding, squeezing with two rollers and curing. The curing conditions (irrespective of how the pretreatment was applied) are shown in Table 4 above.

**Table 5: Pretreatment application details**

| Fabric | Wet pretreatment (g) | Area $(in)^2$ | Wet pretreatment $(g/in^2)$ |
|---|---|---|---|
| Polyester | 81 | 0.222 $m^2$ (344) | 0.24* |
| Cotton | 54 | 0.222 $m^2$ (344) | 0.16* |
| Polyester/Cotton Blend | 69 | 0.222 $m^2$ (344) | 0.20 * |
| * 1 $in^2$ = 6.45 $cm^2$ | | | |

**Pigmented Ink application**

DTG Bright White ink (Genuine DTG Digital Ink: Bright V02 White) was used as the control ink for the development of this disclosure. The DTG white ink was applied to the black dyed T-shirt fabric using either spraying (as described above) or digitally applied to the garment (DTG machine printing). When the white or colored digital ink was applied digitally, the DTG white and colored inks were printed using a DTG printer (DTG Digital Viper by Colman and Company). The white and colored inks used in the disclosure (whether applied manually or digitally) can be purchased over the internet from companies such as DuPont under its Artistri™ trade name, M&R Companies in Glen Ellyn, Illinois, and marketers such as Belquette, Inc. in Clearwater, Florida, Atlas Screen Supply Co. in Illinois, and Garment Printer Ink in New York, New York.

**Washing test**

A GE Profile home laundry top loading washer (model #WPRE8100G) was used for the home laundering wash test. The settings were: hot wash and cold rinse, extra-large load and casual heavy wash. The fabric samples were put into the washer together with 5 standard-sized lab coats. A standard washing cycle (45 minutes at 55.6 °C (132°F))was used to wash the fabric for 5 consecutive complete wash cycles. The detergent used was Tide Liquid detergent at the recommended dosage per load. The five home launderings (i.e., the wet garments were rewashed four additional times) were followed by one single tumble dry cycle (on auto cycle permanent press) using an American Motors Corp (Model# DE-840B-53) dryer.

**L*a*b* color measurement (CIELAB) for ink retention and color value**

The fabric that was spray treated with a layer of white ink was cured following the same instructions from Table 4. The L*a*b* values were measured on the area with white ink using a colorimetric meter made by Gretagmacbeth (Model# Color i 7). The fabric was then subjected to 5 home launderings and one dry cycle as described above. The L*a*b* values were measured again. The L*-value of the white ink reflects the total whiteness. A higher L*-value indicates higher ink whiteness.

Loss of ink color (loss of chromaticity) by washing is measured by units of ΔE* (Change in Emissivity). ΔE* can be calculated based on the differences in the L*a*b* before and after wash. A higher ΔE* indicates more ink wash off. ΔE* calculation is shown below. Using $(L_1^*, a_1^*, b_1^*)$ and $(L_2^*, a_2^*, b_2^*)$ with subscript 2= after wash and subscript 1= before wash

$$\Delta E^* = \sqrt{(L_2^* - L_1^*)^2 + (a_2^* - a_1^*)^2 + (b_2^* - b_1^*)^2}$$

**Table 6: L* Value and ΔE* on Pretreated and White Ink Coated Fabric (Polyester, Cotton, or Blend)**

| Composition reference | Base Polymer | Colloidal stability | Acid type and level (phr) | Metal Salt (phr) | Fabric type | Pretreatment add-on | White ink add-on | initial L* value | ΔE* |
|---|---|---|---|---|---|---|---|---|---|
| Pretreatment 1 | Dispersion A | Good | None | - | PES – Tee | 30-35% | 88.5 % | 43.02 | 3.7 |
| Pretreatment 9 | Dispersion A | Good | Citric 511.4 | - | PES – Tee | 25-30% | 43.4 % | 69.70 | 8.2 |
| Pretreatment 10 | Dispersion A | Good | Phosphoric 51.1 | - | PES – Tee | 25-30% | 50.2 % | 68.08 | 4.1 |
| Pretreatment 11 | Dispersion A | Good | Formic 460.2 | - | PES – Tee | 25-30% | 46.4 % | 69.83 | 3.5 |
| Pretreatment 12 | Dispersion A | Good | HCl 51 | - | PES – Tee | 25-30% | 48.9 % | 39.11 | 1.8 |
| Pretreatment 13 | Dispersion A | Good | Acetic 511 | - | PES - Tee | 25-30% | 49.8 % | 29.08 | 2.6 |

| Composition reference | Base Polymer | Colloidal stability | Acid type and level (phr) | Metal Salt (phr) | Fabric type | Pretreatment add-on | White ink add-on | initial L* value | ΔE* |
|---|---|---|---|---|---|---|---|---|---|
| Pretreatment 14 | Dispersion A | Coagulated | Sulfuric 511 | - | PES – Tee | 25-30% | 25.9 % | 73.11 | 4.1 |
| Commercial DTG pretreat | Compositional details unknown | | | | PES- Tee | 30-35% | 62-77% | 57-61 | 4-6 |
| Commercial DTG pretreat | Compositional details unknown | | | | Cotton T-shirt | 15-20% | 44-53% | 84-91 | 2-8 |
| Commercial DTG pretreat | Compositional details unknown | | | | 40/60 PES/COT | 20-25 | 42-46 | 79-81 | 6-7 |
| Pretreatment 11 | Dispersion A | Good | Formic 460 | | Cotton T-shirt | 15-20% | 39.3 % | 30.02 | 2.1 |
| Pretreatment 9 | Dispersion A | Good | Citric 511 | | 40/60 PES/COT | 20-25 | 23-28 | 71-77 | 13-16 |

| Composition reference | Base Polymer | Colloidal stability | Acid type and level (phr) | Metal Salt (phr) | Fabric type | Pretreatment add-on | White ink add-on | initial L* value | ΔE* |
|---|---|---|---|---|---|---|---|---|---|
| Pretreatment **5** | Dispersion B | Good | Acetic 139 | $CaCl_2$ 139 | 60/40 PES/COT | 20-25 | 53.3 | 84.7 | 3.5 |
| Pretreatment **5** | Dispersion B | Good | Acetic 139 | $CaCl_2$ 139 | PES | 25-30 | 57.7 | 80.8 | 2.0 |
| Pretreatment 5 | Dispersion B | Good | Acetic 139 | $CaCl_2$ 139 | COT | 15-20 | 45.3 | 87.0 | 1.3 |
| Pretreatment 15 | Dispersion B | Good | Citric 32 | $CaCl_2$ 139 | PES | 30-35 | 36.6 | 81.4 | 7.2 |
| Pretreatment 16 | Dispersion E | Good | Formic 32 | $CaCl_2$ 139 | COT | 15-20 | 49.1 | 92.2 | 2.4 |
| Pretreatment 6 | Dispersion E | Good | Citric 32 | $CaCl_2$ 139 | COT | 15-20 | 33.5 | 91.1 | 4.4 |
| Pretreatment 10 | Dispersion I | Good | Citric 32 | $CaCl_2$ 139 | COT | | | 92.0 | 2.6 |

All pretreatments for this table were applied by padder, inks were spray applied. Samples similar to above we made using polyacrylic acid, oxalic acid or maleic acid and these coagulated before they could be tested. Commercial DTG pretreatment refers to a commercial product from commercial suppliers such as DuPont, M&R Companies in Glen Ellyn, Illinois and other marketers. PES is polyester fabric, COT is

cotton fabric, and PES/COT is a cotton polyester blended fabric of specified weight percentages. Dispersion I is a similar reciper to Dispersion E but the amount of Tegomer D3403 was doubled. Pretreatments 1, 9, 10, 11, 12, 13 and 14 are not according to the invention.

**Table 7: L* Value and ΔE* Results of Pretreatment and White Ink on Polyester T-shirt fabric**

| Composition reference | Base Polymer | Colloidal stability | Acid type | Acid level in Total (phr) Solution | Metal salt | Metal salt (phr) | Pretreatment add-on | White ink add-on | initial L* value | ΔE* |
|---|---|---|---|---|---|---|---|---|---|---|
| Pretreatment 7 | Dispersion D | Good | Citric | 32 | $CaCl_2$ | 139 | 25-30 | 47 | 77.0 | 4.5 |
| Pretreatment 1 | Dispersion A | Good | Citric | 32 | $CaCl_2$ | 139 | 25-30 | 52 | 78.4 | 7.5 |
| Commercial DTG pretreat | Compositional details unknown | | | | | | 30-35 | 62-77 | 57-61 | 4-6 |
| Pretreatment 2 | Dispersion B (remake) | Good | $AlCl_3$ 49 | 49 | $CaCl_2$ $AlCl_3$ | 98 49 | 30-35 | 62-72 | 83-85 | 3-5 |
| Pretreatment 3 | Dispersion B (remake) | Good | $AlCl_3$ 49 | 49 | $CaCl_2$ $MgCl_2$ | 49 49 | 30-35 | 74 | 81 | 3.2 |
| Pretreatment 17 | Dispersion B (remake) | Good | Citric | 32 | $CaCl_2$. $MgCl_2$ | 93 46 | 30-35 | 76.5 | 80.4 | 4.9 |

| Composition reference | Base Polymer | Colloidal stability | Acid type | Acid level in Total (phr) Solution | Metal salt | Metal salt (phr) | Pretreatment add-on | White ink add-on | initial L* value | ΔE* |
|---|---|---|---|---|---|---|---|---|---|---|
| Pretreatment 16 | Dispersion B (remake) | Good | Formic | 32 | $CaCl_2$ | 139 | 30-35 | 78.7 | 81.8 | 4.4 |
| Pretreatment 18 | Dispersion B | Good | Formic | 32 | $CaCl_2$ | 139 | 30-35 | 70.7 | 81.6 | 3.3 |
| Pretreatment 6 | Dispersion E | Good | Citric | 32 | $CaCl_2$ | 139 | 25-30 | 51.0 | 79.2 | 2.2 |
| Pretreatment 10 | Dispersion I | Good | Citric | 32 | $CaCl_2$ | 139 | 25-30 | 51.6 | 79.1 | 1.8 |

$AlCl_3$ is a strong acid and generates $Al^{3+}$ polyvalent salts on reaction with water. Thus it functions as both the acid component and the divalent or polyvalent salt. All pretreatments for this table were applied by padder, inks were spray applied.

Pretreatments 1 and 10 are not according to the invention.

**Table 8 Color intensity values via L*a*b* for Commercially Digitally Printed Black Polyester T-Shirts with P18 versus Commercial DTG Fabric Pretreatments**

| Color | L* value | | | a* value | | | b* value | | |
|---|---|---|---|---|---|---|---|---|---|
| | P18 | DTG | chng | P18 | DTG | chng | P18 | DTG | chng |
| Red | 31.54 | 26.55 | 4.99 | 27.39 | 17.43 | 9.96 | 14.74 | 9.92 | 4.82 |
| Purple | 21.33 | 19.85 | 1.48 | 7.94 | 6.19 | 1.75 | -16.3 | -15.55 | 0.75 |
| Orange | 38.65 | 32.35 | 6.30 | 19.13 | 9.74 | 9.39 | 25.61 | 19.12 | 6.49 |
| Green | 26.18 | 25.86 | 0.32 | -15.13 | -16.61 | -1.48 | 5.15 | 5.93 | -0.78 |
| Blue | 30.59 | 28.34 | 2.25 | -6.67 | -7.21 | 0.54 | -28.7 | -21.77 | 6.93 |
| Pink | 31.31 | 26.55 | 4.76 | 36.24 | 23.38 | 12.86 | -3.01 | -7.02 | -4.01 |
| Yellow | 52.15 | 40.68 | 11.47 | -1.43 | -5.27 | -3.84 | 47.98 | 32.03 | 15.95 |
| Black | 18.55 | 17.36 | 1.19 | 0.37 | 0.25 | 0.12 | 0.28 | -0.03 | 0.31 |

The L*a*b* values above are on identical black polyester t-shirts commercially printed. The pretreatments were applied by spray and cured under pressure at 140C for 30 seconds (see Table 4). Then white ink was selectively digitally

applied to areas benefitting from white ink and then an image was digitally printed using the colors indicated. The printed image was cured at 140°C for 3 minutes under 0.276 MPa (40 psi) pressure. The only difference between samples was the use of Pretreatment 18 (P18) and the commercial pretreatment DTG. The L*a*b* data is not straight forward because of the negative numbers. We have compared the values for the inventive (P18) pretreatment and the commercial control pretreatment (DTG) and indicated by changing the absolute difference in values between P18 pretreatment and the commercial DTG pretreatment (positive numbers indicate the P18 had larger absolute value and negative numbers indicated DTG had larger absolute values). L* value indicates the total whiteness. It is always positive. A high value indicates high whiteness. As the chart (below) indicates, a* is the scale of green to red and b* is the scale of blue to yellow. Negative a* indicates green color, while negative b* indicates blue color. The larger the number (even, negative), indicates more intense of the particular color.

The Figure shows the difference between color results on the P18 pretreatment and the commercial DTG treatment after a variety of standard color inks were digitally applied to fabrics treated with P18 pretreatment or a commercial digital print pretreatment (the same commercial pretreatment from Tables 6 and 7) in a different format (Chromaticity Diagram). Generally, the larger the area within the color diagram the higher the color intensity. The x and y coordinates are hue and chroma. They can be measured directly with a Gretagmacbeth colorimetric meter according to ASTM E308-85 (which also supplies L*a*b* measurements in the previous table).

## Claims

**1.** A substrate pretreatment material comprising;

a) an aqueous cationic polyurethane dispersion (PUD) comprising an aqueous dispersion of a polyurethane having a polyurethane backbone segment with one or more tethered tertiary amino groups laterally attached to said backbone segment wherein said tertiary amino groups are optionally partially or fully neutralized with a neutralising acidic species or quaternized and wherein said tertiary amine groups are separated from said polyurethane backbone by at least one, more preferably at least two, intervening atoms in their tethering group,
b) a blocked isocyanate crosslinking moiety as part of the polyurethane and/or as a separate molecule from said polyurethane,
c) additional organic and/or inorganic coagulating acid in an amount of at least one equivalent per equivalent of tethered or backbone tertiary amine beyond the amount of acidic species that were required to fully neutralize said tertiary amine groups and up to 50 times said amount in equivalents to neutralize said tertiary amine groups, and
d) one or more water soluble di- and/or polyvalent metal salts selected from the group consisting of salts of $Ca^{2+}$, $Al^{3+}$, $Mg^{2+}$, $Zn^{2+}$ and $Zr^{4+}$, preferably wherein the counter ions are selected from $NO_3^-$, $SO_4^{2-}$, acetate, or $Cl^-$.

**2.** The substrate pretreatment material of claim 1, wherein the organic or inorganic coagulating acid beyond that required to fully neutralize the tertiary amine comprises a water soluble organic carboxylic acid of 1 to 20 carbon atoms having 1 or more acid groups, a phosphorus containing acid, and/or an aluminum based acid.

**3.** The substrate pretreatment material of any of claim 1 or 2, wherein said neutralizing acid species of element a) comprises at least one acidic species selected from the group consisting of formic, acetic, oxalic, citric, tartaric, itaconic, stearic, and phosphorous containing acid and derivatives thereof.

**4.** The substrate pretreatment material of any of claims 1 to 3, further comprising a surface active agent and/or spreading agent selected from the group consisting of nonionic surfactants, cationic surfactants, mono or polyhydric alcohols having molecular weights from 32 to 100 or 200 g/mole to facilitate bonding to the substrate, preferably wherein said mono alcohol is ethanol or isopropanol.

**5.** The substrate pretreatment material of any of the preceding claims, wherein the coagulating organic or inorganic acid comprises acetic, citric, oxalic, formic, itaconic, tartaric, $AlCl_3$, and/or phosphoric acid or derivatives of said acids.

**6.** The substrate pretreatment material of any of the preceding claims, wherein the blocked isocyanate crosslinking moiety comprises a molecule containing 1,3-diketone functionality, desirably esters of malonic acid, preferably a dialkyl malonate molecule where each independent alkyl group has 1 to 12 carbon atoms, more preferably said crosslinking moiety attached to the polyurethane as opposed to being part of a separate molecule from the polyurethane, most preferably wherein the molecule containing 1,3-diketone functionality comprises diethyl malonate.

7. The substrate pretreatment material of any of claims 1 to 5, wherein the reactive crosslinking moiety is a self-crosslinking moiety attached to the polyurethane and comprises dialkyl ketoxime wherein each independent alkyl group has 1 to 12 carbon atoms, preferably wherein the dialkyl ketoxime comprises methyl ethyl ketoxime.

8. The substrate pretreatment material of any of claims 1 to 7, wherein said polyurethane further comprises from 0.1 to 15 weight percent of side-chain hydrophilic oligomers of $C_2$-$C_4$ alkylene-oxides based on the polyurethane binder weight, preferably having a lower limit of 0.5 or 1 and an upper limit of 6 or 10 weight percent.

9. The substrate pretreatment coating material of any of the preceding claims, wherein the tethered tertiary amino groups are incorporated into the polyurethane by reacting at least one tertiary amino group compound having about two isocyanate-reactive hydrogens during the synthesis of said polyurethane and wherein at least a portion of said tethered tertiary amino groups form cationic groups.

10. The substrate pretreatment material of any of the preceding claims, wherein the polyurethane of said aqueous cationic polyurethane dispersion is present from 2 to 15 % by weight, or 2 to 10 % by weight, based upon the weight of said substrate pretreatment as applied.

11. The substrate pretreatment material of any of the preceding claims, wherein at least 50 mole % of said tethered tertiary amino groups are neutralized or quaternized versions thereof and wherein said tethered tertiary amino groups are derived from 3-dimethylaminopropylamino-1,1'-bis-(propan-2-ol); 3-dimethylamino-1,2-propanediol; or N,N,N'-trimethyl-N'-hydroxyethylbisaminoethylether.

12. A substrate pretreatment material, according to any of the preceding claims, as a dried film or coating on a substrate, said substrate comprising a polymer film or a woven or nonwoven substrate.

13. A substrate pretreatment material, as a dried film or coating, on a substrate according to claim 12 in the form of a textile cloth or garment.

14. A substrate pretreatment on a substrate according to claim 12, wherein said woven or nonwoven substrate is at least 25 wt.% cotton, more desirable at least 50 wt.% cotton and preferably at least 80 wt.% cotton, or wherein said woven or nonwoven substrate is at least 25 wt.% polyester, more desirable at least 50 wt.% polyester and in one embodiment preferably at least 80 wt.% polyester, or wherein the substrate is paper, desirably in the form of a textile or garment, optionally dyed or pigmented, or wherein the substrate is a polymeric film, in one embodiment desirably a polyolefin or polyester based substrate and preferably a polypropylene based substrate.

## Patentansprüche

1. Substratvorbehandlungsmaterial, umfassend:

a) eine wässrige kationische Polyurethandispersion (PUD), die eine wässrige Dispersion eines Polyurethans umfasst, das ein Polyurethangerüstsegment mit einer oder mehreren, über Spacer gebundenen tertiären Aminogruppen, die seitlich an das Gerüstsegment gebunden sind, aufweist, wobei die tertiären Aminogruppen gegebenenfalls teilweise oder vollständig mit einer neutralisierenden sauren Spezies neutralisiert oder quaternisiert sind und wobei die tertiären Aminogruppen durch wenigstens ein, besonders bevorzugt wenigstens zwei, dazwischenliegende Atome in ihrer Spacergruppe von dem Polyurethangerüst getrennt sind;
b) eine blockierte Isocyanat-Vernetzungsstruktureinheit als Teil des Polyurethans und/oder als von dem Polyurethan getrenntes Molekül;
c) eine zusätzliche organische und/oder anorganische koagulierende Säure in einer Menge von wenigstens einem Äquivalent pro Äquivalent des über Spacer oder im Gerüst gebundenen tertiären Amins über die Menge der sauren Spezies, die erforderlich waren, um die tertiären Amingruppen vollständig zu neutralisieren, hinaus und bis zum 50-fachen dieser Menge in Äquivalenten zum Neutralisieren der tertiären Amingruppen; und
d) ein oder mehrere wasserlösliche zwei- und/oder mehrwertige Metallsalze, die aus der Gruppe ausgewählt sind, die aus Salzen von $Ca^{2+}$, $Al^{3+}$, $Mg^{2+}$, $Zn^{2+}$ und $Zr^{4+}$ besteht, wobei vorzugsweise die Gegenionen aus $NO_3^-$, $SO_4^{2-}$, Acetat oder $Cl^-$ ausgewählt sind.

2. Substratvorbehandlungsmaterial gemäß Anspruch 1, wobei die organische oder anorganische koagulierende Säure über diejenige, die erforderlich war, um das tertiäre Amin vollständig zu neutralisieren, hinaus eine wasserlösliche

organische Carbonsäure mit 1 bis 20 Kohlenstoffatomen, die 1 oder mehrere Säuregruppen aufweist, eine phosphorhaltige Säure und/oder eine Säure auf Aluminiumbasis umfasst.

3. Substratvorbehandlungsmaterial gemäß einem der Ansprüche 1 oder 2, wobei die neutralisierende Säurespezies von Element a) wenigstens eine saure Spezies umfasst, die aus der Gruppe ausgewählt ist, die aus Ameisen-, Essig-, Oxal-, Zitronen-, Wein-, Itacon-, Stearin- und phosphorhaltiger Säure und Derivaten davon besteht.

4. Substratvorbehandlungsmaterial gemäß einem der Ansprüche 1 bis 3, weiterhin umfassend ein Tensid und/oder Spreitmittel, das aus der Gruppe ausgewählt ist, die aus nichtionischen Tensiden, kationischen Tensiden, ein- oder mehrwertigen Alkoholen mit Molekulargewichten von 32 bis 100 oder 200 g/mol besteht, um die Bindung an das Substrat zu erleichtern, wobei der Monoalkohol vorzugsweise Ethanol oder Isopropanol ist.

5. Substratvorbehandlungsmaterial gemäß einem der vorstehenden Ansprüche, wobei die koagulierende organische oder anorganische Säure Essig-, Zitronen-, Oxal-, Ameisen-, Itacon-, Wein-, $AlCl_3$- und/oder Phosphorsäure oder Derivate dieser Säuren umfasst.

6. Substratvorbehandlungsmaterial gemäß einem der vorstehenden Ansprüche, wobei die blockierte Isocyanat-Vernetzungsstruktureinheit ein Molekül umfasst, das 1,3-Diketon-Funktionalität enthält, wünschenswerterweise Ester von Malonsäure, vorzugsweise ein Dialkylmalonatmolekül, bei dem jede unabhängige Alkylgruppe 1 bis 12 Kohlenstoffatome aufweist, die Vernetzungsstruktureinheit besonders bevorzugt an das Polyurethan gebunden ist und nicht Teil eines von dem Polyurethan getrennten Moleküls ist, wobei das Molekül, das 1,3-Diketon-Funktionalität enthält, am meisten bevorzugt Diethylmalonat umfasst.

7. Substratvorbehandlungsmaterial gemäß einem der Ansprüche 1 bis 5, wobei die reaktive Vernetzungsstruktureinheit eine selbstvernetzende Struktureinheit ist, die an das Polyurethan gebunden ist und Dialkylketoxim umfasst, wobei jede unabhängige Alkylgruppe 1 bis 12 Kohlenstoffatome aufweist, wobei das Dialkylketoxim vorzugsweise Methylethylketoxim umfasst.

8. Substratvorbehandlungsmaterial gemäß einem der Ansprüche 1 bis 7, wobei das Polyurethan weiterhin 0,1 bis 15 Gew.-% hydrophile Seitenkettenoligomere von $C_2$-$C_4$-Alkylenoxiden umfasst, bezogen auf das Gewicht des Polyurethanbindemittels, die vorzugsweise eine Untergrenze von 0,5 oder 1 und eine Obergrenze von 6 oder 10 Gew.-% aufweisen.

9. Substratvorbehandlungsbeschichtungsmaterial gemäß einem der vorstehenden Ansprüche, wobei die über Spacer gebundenen tertiären Aminogruppen dadurch in das Polyurethan eingebaut werden, dass man während der Synthese des Polyurethans wenigstens eine Verbindung mit tertiärer Aminogruppe, die etwa zwei Isocyanat-reaktive Wasserstoffatome aufweist, umsetzt, und wobei wenigstens ein Teil der über Spacer gebundenen tertiären Aminogruppen kationische Gruppen bilden.

10. Substratvorbehandlungsmaterial gemäß einem der vorstehenden Ansprüche, wobei das Polyurethan der wässrigen kationischen Polyurethandispersion in einer Menge von 2 bis 15 Gew.-% oder 2 bis 10 Gew.-% vorhanden ist, bezogen auf das Gewicht der aufgetragenen Substratvorbehandlung.

11. Substratvorbehandlungsmaterial gemäß einem der vorstehenden Ansprüche, wobei wenigstens 50 Mol-% der über Spacer gebundenen tertiären Aminogruppen neutralisierte oder quaternisierte Versionen davon sind und wobei die über Spacer gebundenen tertiären Aminogruppen von 3-Dimethylaminopropylamino-1,1'-bis(propan-2-ol), 3-Dimethylamino-1,2-propandiol oder N,N,N'-Trimethyl-N'-hydroxyethylbisaminoethylether abgeleitet sind.

12. Substratvorbehandlungsmaterial gemäß einem der vorstehenden Ansprüche als getrockneter Film oder getrocknete Beschichtung auf einem Substrat, wobei das Substrat eine Polymerfolie oder ein gewebtes oder Vliesstoffsubstrat umfasst.

13. Substratvorbehandlungsmaterial als getrockneter Film oder getrocknete Beschichtung auf einem Substrat gemäß Anspruch 12 in Form eines Textilstoffs oder Kleidungsstücks.

14. Substratvorbehandlung auf einem Substrat gemäß Anspruch 12, wobei das gewebte oder Vliesstoffsubstrat zu wenigstens 25 Gew.-% aus Baumwolle, wünschenswerterweise zu wenigstens 50 Gew.-% aus Baumwolle und vorzugsweise zu wenigstens 80 Gew.-% aus Baumwolle besteht oder wobei das gewebte oder Vliesstoffsubstrat

zu wenigstens 25 Gew.-% aus Polyester, wünschenswerterweise zu wenigstens 50 Gew.-% aus Polyester und in einer Ausführungsform vorzugsweise zu wenigstens 80 Gew.-% aus Polyester besteht oder wobei das Substrat aus Papier besteht, wünschenswerterweise in Form eines Textils oder Kleidungsstücks, gegebenenfalls gefärbt oder pigmentiert, oder wobei das Substrat eine polymere Folie, in einer Ausführungsform wünschenswerterweise ein Substrat auf Polyolefin- oder Polyesterbasis und vorzugsweise ein Substrat auf Polypropylenbasis ist.

**Revendications**

1. Matériau de prétraitement de substrat comprenant ;

   a) une dispersion aqueuse de polyuréthane cationique (PUD) comprenant une dispersion aqueuse d'un polyuréthane ayant un segment de squelette de polyuréthane avec un ou plusieurs groupes amino tertiaires attachés liés latéralement audit segment de squelette dans lequel lesdits groupes amino tertiaires sont facultativement partiellement ou totalement neutralisés avec une espèce acide de neutralisation ou quaternisés et dans lequel lesdits groupes amine tertiaires sont séparés dudit squelette de polyuréthane par au moins un, de manière davantage préférée au moins deux, atomes intermédiaires dans leur groupe d'attache,
   b) un fragment de réticulation de type isocyanate bloqué en tant que partie du polyuréthane et/ou en tant que molécule séparée par rapport audit polyuréthane,
   c) un acide organique et/ou inorganique de coagulation supplémentaire en une quantité d'au moins un équivalent par équivalent d'amine tertiaire attachée ou de squelette au-delà de la quantité des espèces acides qui étaient requises pour neutraliser totalement lesdits groupes amine tertiaires et jusqu'à 50 fois ladite quantité en équivalents pour neutraliser lesdits groupes amine tertiaires, et
   d) un ou plusieurs sels métalliques di- et/ou poly-valents hydrosolubles sélectionnés dans le groupe constitué des sels de $Ca^{2+}$, $Al^{3+}$, $Mg^{2+}$, $Zn^{2+}$ et $Zr^{4+}$, de préférence dans lequel les contre-ions sont sélectionnés parmi $NO_3^-$, $SO_4^{2-}$, l'acétate, ou $Cl^-$.

2. Matériau de prétraitement de substrat selon la revendication 1, dans lequel l'acide organique ou inorganique de coagulation au-delà de ce qui est requis pour neutraliser totalement l'amine tertiaire comprend un acide carboxylique organique hydrosoluble contenant 1 à 20 atomes de carbone ayant 1 ou plusieurs groupes acides, un acide contenant un phosphore, et/ou un acide à base d'aluminium.

3. Matériau de prétraitement de substrat selon la revendication 1 ou 2, dans lequel ladite espèce acide de neutralisation de l'élément a) comprend au moins une espèce acide sélectionnée dans le groupe constitué de l'acide formique, de l'acide acétique, de l'acide oxalique, de l'acide citrique, de l'acide tartrique, de l'acide itaconique, de l'acide stéarique, et d'un acide contenant un phosphore et des dérivés de ceux-ci.

4. Matériau de prétraitement de substrat selon l'une quelconque des revendications 1 à 3, comprenant un agent tensioactif et/ou un agent d'étalement sélectionné dans le groupe constitué des tensioactifs non ioniques, des tensioactifs cationiques, des alcools mono- ou poly-hydrique ayant des poids moléculaires allant de 32 à 100 ou 200 g/mole pour faciliter la liaison au substrat, de préférence dans lequel ledit mono alcool est l'éthanol ou l'isopropanol.

5. Matériau de prétraitement de substrat selon l'une quelconque des revendications précédentes, dans lequel l'acide organique ou inorganique de coagulation comprend l'acide acétique, l'acide citrique, l'acide oxalique, l'acide formique, l'acide itaconique, l'acide tartrique, $AlCl_3$, et/ou l'acide phosphorique ou les dérivés desdits acides.

6. Matériau de prétraitement de substrat selon l'une quelconque des revendications précédentes, dans lequel le fragment de réticulation de type isocyanate bloqué comprend une molécule contenant une fonctionnalité 1,3-dicétone, des esters souhaitables de l'acide malonique, de préférence une molécule de malonate de dialkyle où chaque groupe alkyle indépendant contient 1 à 12 atomes de carbone, de manière davantage préférée ledit fragment de réticulation est lié au polyuréthane au lieu de faire partie d'une molécule séparée du polyuréthane, de manière préférée entre toutes dans lequel la molécule contenant une fonctionnalité 1,3-dicétone comprend le malonate de diéthyle.

7. Matériau de prétraitement de substrat selon l'une quelconque des revendications 1 à 5, dans lequel le fragment de réticulation réactif est un fragment d'auto-réticulation lié au polyuréthane et comprend un dialkyl cétoxime dans lequel chaque groupe alkyle indépendant contient 1 à 12 atomes de carbone, de préférence dans lequel le dialkyl

cétoxime comprend le méthyl éthyl cétoxime.

**8.** Matériau de prétraitement de substrat selon l'une quelconque des revendications 1 à 7, dans lequel ledit polyuréthane comprend en outre de 0,1 à 15 pour cent en poids d'oligomères hydrophiles d'oxydes d'alkylène en $C_2$ à $C_4$ de chaîne latérale sur la base du poids du liant de polyuréthane, de préférence présentant une limite inférieure de 0,5 ou 1 et une limite supérieure de 6 ou 10 pour cent en poids.

**9.** Matériau de revêtement de prétraitement de substrat selon l'une quelconque des revendications précédentes, dans lequel les groupes amino tertiaires attachés sont incorporés dans le polyuréthane par la réaction d'au moins un composé à groupe amino tertiaire contenant environ deux hydrogènes réactifs avec un isocyanate pendant la synthèse dudit polyuréthane et dans lequel au moins une partie desdits groupes amino tertiaires attachés forme des groupes cationiques.

**10.** Matériau de prétraitement de substrat selon l'une quelconque des revendications précédentes, dans lequel le polyuréthane de la dispersion aqueuse de polyuréthane cationique est présent de 2 à 15 % en poids, ou de 2 à 10 % en poids, sur la base du poids dudit prétraitement de substrat tel qu'appliqué.

**11.** Matériau de prétraitement de substrat selon l'une quelconque des revendications précédentes, dans lequel au moins 50 % en mole desdits groupes amino tertiaires attachés sont des versions neutralisées ou quaternisées de ceux-ci et dans lequel lesdits groupes amino tertiaires attachés sont dérivés du 3-diméthylamino-propylamino-1,1'-bis-(propan-2-ol) ; du 3-diméthylamino-1,2-propanediol ; ou du N,N,N' -triméthyl-N' -hydroxyéthylbisaminoéthyléther.

**12.** Matériau de prétraitement de substrat, selon l'une quelconque des revendications précédentes, sous la forme d'un film ou revêtement sec sur un substrat, ledit substrat comprenant un film de polymère ou un substrat tissé ou non tissé.

**13.** Matériau de prétraitement de substrat, sous la forme d'un film ou revêtement sec, sur un substrat selon la revendication 12 sous la forme d'un tissu de textile ou d'un vêtement.

**14.** Prétraitement de substrat sur un substrat selon la revendication 12, dans lequel ledit substrat tissé ou non tissé est au moins à 25 % en poids en coton, de manière davantage souhaitable à au moins 50 % en poids en coton et de préférence à au moins 80 % en poids en coton, ou dans lequel ledit substrat tissé ou non tissé est au moins à 25 % en poids en polyester, de manière davantage souhaitable à au moins 50 % en poids en polyester et dans un mode de réalisation de préférence à au moins 80 % en poids en polyester, ou dans lequel le substrat est un papier, de manière souhaitable sous la forme d'un textile ou d'un vêtement, facultativement teint ou pigmenté, ou dans lequel le substrat est un film de polymère, dans un mode de réalisation de manière souhaitable un substrat à base de polyoléfine ou de polyester et de préférence un substrat à base de polypropylène.

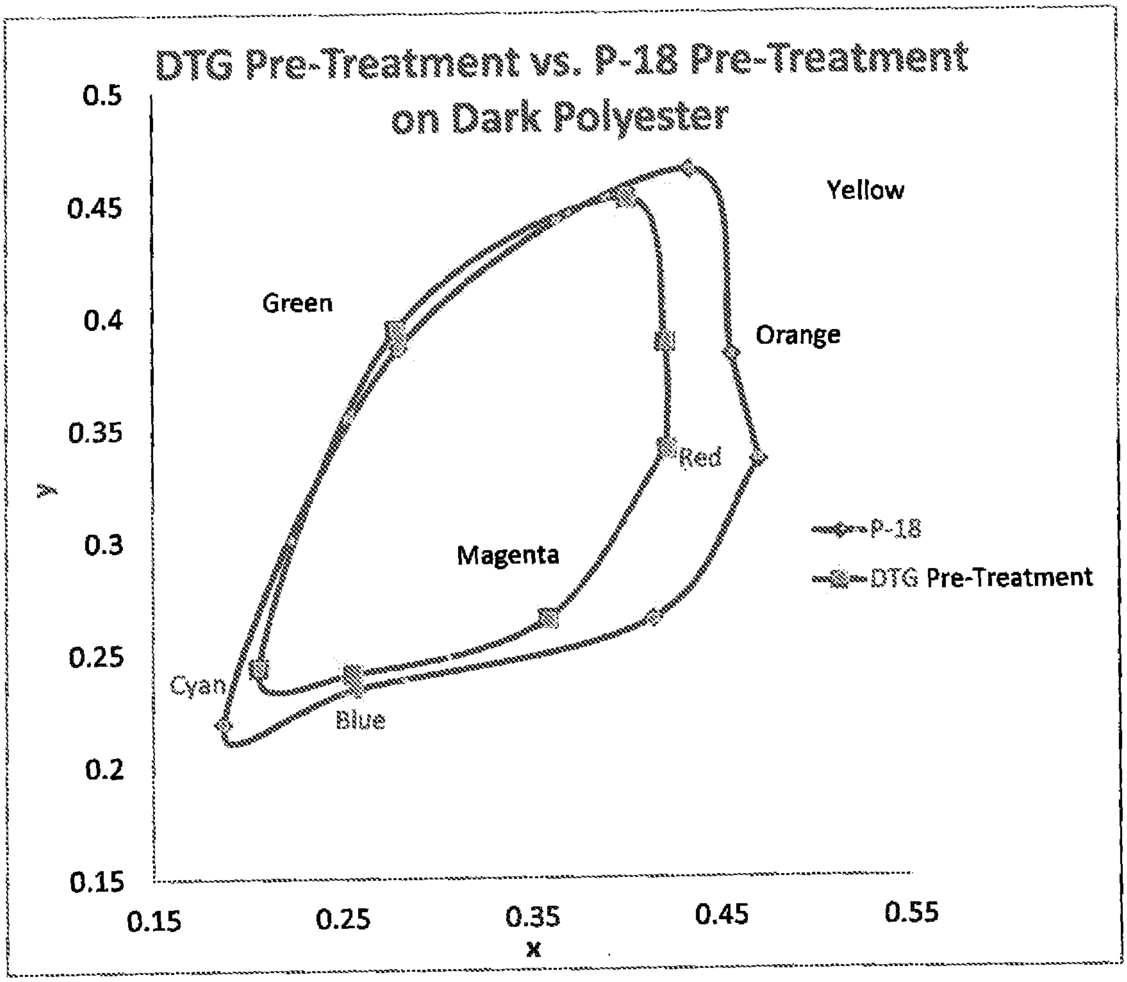
DTG Pre-Treatment vs. P-18 Pre-Treatment on Dark Polyester
0.5
0.45
0.4
0.35
0.3
0.25
0.2
0.15
y
0.15
0.25
0.35
0.45
0.55
x
Yellow
Green
Orange
Red
Magenta
Cyan
Blue
P-18
DTG Pre-Treatment

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1924658 A
- US 20080092309 A1
- US 20070103528 A
- EP 1356155 A
- EP 1240383 A
- WO 2012058534 A
- EP 1777243 A
- US 6897281 B
- US 2826526 A
- GB 1442024 A
- US 6891012 B
- US 6576702 B
- US 4644030 A
- US 4730021 A
- US 5137961 A
- US 5371133 A
- WO 9838249 A
- US 6022925 A
- US 6140412 A
- US 7582698 B


### Non-patent literature cited in the description


- **Z. W. WICKS JR.** *Progress in Organic Coatings,* 1975, vol. 3, 73-99
- **D. DIETERICH.** *Progress in Organic Coatings,* 1981, vol. 9, 281-340
- **D. A. WICKS ; Z. W. WICKS JR.** *Progress in Organic Coatings,* 2001, vol. 43, 131-140
- **D.K. CHATTOPADHYAY ; K.V.S.N. RAJU.** *Prog. Polym. Sci.,* 2007, vol. 32, 352-418
- **T. FÄCKE ; R. SUBRAMANIAN ; M. DVORCHAK ; S FENG.** Proceedings of the 31st International Waterborne. *High-Solids, and Powder Coatings Symposium,* 2004, 40-52
- **J.W. TAYLOR ; M.A. WINNIK.** Functional Latex and Thermoset Latex Films. *J. Coatings Tech., Research,* 2004, vol. 1 (3), 163
- **M. DERY.** *Kirk-Othmer Encyclopedia of Chemical Technology,* 1996, vol. 20, 739-767
- Resins, Water-Soluble. **A. S. TEOT et al.** Kirk-Othmer Encyclopedia of Chemical Technology. John Wiley & Sons, 1982, vol. 20, 207-230